**Europäisches Patentamt**

**European Patent Office**

**Office européen des brevets**

(19)

(11) Veröffentlichungsnummer : **0 200 087**
**B1**

(12) **EUROPÄISCHE PATENTSCHRIFT**

(45) Veröffentlichungstag der Patentschrift :
**17.08.88**

(51) Int. Cl.⁴ : **B 31 B   1/26**, B 65 B  19/22,
B 65 D  85/10

(21) Anmeldenummer : **86105176.1**

(22) Anmeldetag : **15.04.86**

(54) **Verfahren und Vorrichtung zum Herstellen von Packungen mit abgerundeten oder abgeschrägten Kanten.**

(30) Priorität : **02.05.85 DE 3515775**

(43) Veröffentlichungstag der Anmeldung :
**05.11.86 Patentblatt 86/45**

(45) Bekanntmachung des Hinweises auf die Patenterteilung : **17.08.88 Patentblatt 88/33**

(84) Benannte Vertragsstaaten :
**DE FR GB IT**

(56) Entgegenhaltungen :
**DE-A- 2 440 006**
**US-A- 4 349 345**

(73) Patentinhaber : **Focke & Co. (GmbH & Co.)**
**Siemensstrasse 10**
**D-2810 Verden (DE)**

(72) Erfinder : **Focke, Heinz**
**Moorstrasse 64**
**D-2810 Verden (DE)**
Erfinder : **Mutschall, Hugo**
**Deelsener Strasse 6**
**D-2816 Kirchlinteln (DE)**

(74) Vertreter : **Bolte, Erich, Dipl.-Ing. et al**
**Hollerallee 73**
**D-2800 Bremen (DE)**

**EP 0 200 087 B1**

**Beschreibung**

Die Erfindung betrifft ein Verfahren zum Herstellen von im wesentlichen quaderförmigen Packungen, insbesondere Zigaretten-Packungen in der Ausführung als Klappschachtel, bestehend aus Boden- und Oberwand, (schmalen) Seitenwänden sowie Vorder- und Rückwand. Weiterhin betrifft die Erfindung eine Vorrichtung zur Durchführung des Verfahrens.

Die Erfindung befaßt sich mit einer gestalterischen Weiterentwicklung derartiger Klappschachteln. Die Besonderheit besteht darin, daß ausgewählte, bei bekannten Packungen rechtwinklig ausgebildete Kanten abgerundet oder abgeschrägt (polygonal) ausgestaltet sind, insbesondere nach Maßgabe der Abmessungen (Durchmesser) der Zigaretten.

Der Erfindung liegt die Aufgabe zugrunde, ein Verfahren und eine Vorrichtung für die Herstellung von Packungen mit Rundkanten bzw. abgeschrägten (Längs-)Kanten vorzuschlagen.

Zur Lösung dieser Aufgabe ist das erfindungsgemäße Verfahren dadurch gekennzeichnet, daß zur Bildung abgerundeter oder abgeschrägter Längskanten im Bereich zwischen Vorder- oder Rückwand einerseits sowie den Seitenwänden andererseits ein ausgebreiteter Zuschnitt im Bereich jeweils eines gemeinsamen, randseitigen Kantenstreifens von Vorderwand oder Rückwand einerseits sowie damit verbundenen Seitenwänden bzw. Seitenlappen andererseits bogenförmig bzw. unter zweimaligem Abwinkeln (polygonal) geformt wird.

Die Rundkanten bzw. Schrägkanten werden demnach erfindungsgemäß an dem flachen, noch ausgebreiteten Zuschnitt angebracht, bevor die Packung im übrigen durch Faltungen etc. geformt wird. Dabei werden nach einem weiteren Vorschlag der Erfindung zur Bildung der Rundkaten bzw. Schrägkanten seitliche, sich in Längsrichtung des Zuschnitts erstreckende Faltlappen aufgerichtet, nämlich Seitenlappen zur Bildung der Seitenwände. Bei einer Klappschachtel werden zugleich mit den Rund- bzw. Schrägkanten im Bereich des Schachtelkörpers Teil des Zuschnitts bildende Deckelseitenlappen aufgerichtet, ebenfalls unter Bildung von Rund- bzw. Schrägkanten im Bereich zwischen Deckelvorderwand bzw. Deckelrückwand einerseits und den Deckelseitenwänden andererseits.

Die erfindungsgemäße Vorrichtung zur Durchführung des Verfahrens ist mit Formwerkzeugen ausgestattet zum Aufrichten der seitlichen Faltlappen des Zuschnitts (Seitenlappen bzw. Deckelseitenlappen). Die Formwerkzeuge umfassen bewegbare Faltorgane (Faltwalzen, Faltleisten) und mit diesen zusammenwirkende Gegenwerkzeuge, nämlich ein als vorzugsweise durchgehende, gemeinsame Platte ausgebildetes Gegenfaltorgan.

Weitere Einzelheiten der Erfindung betreffen die Ausgestaltung und Arbeitsweise der Vorrichtung, insbesondere der Faltorgane und Gegenfaltorgane.

Einzelheiten des erfindungsgemäßen Verfahrens sowie der Vorrichtung werden nachfolgend anhand eines in den Zeichnungen dargestellten Ausführungsbeispiels näher erläutert. Es zeigen :

Fig. 1 einen Zuschnitt für eine Klappschachtel in perspektivischer Seitenansicht nach Bildung der Rundkanten,

Fig. 2 eine Stirnansicht bzw. einen Querschnitt des Zuschnitts gemäß Fig. 1,

Fig. 3 die Vorrichtung in vereinfachter Seitenansicht,

Fig. 4 einen Ausschnitt der Vorrichtung gemäß Fig. 3 in Seitenansicht, bei vergrößertem Maßstab,

Fig. 5 einen Grundriß zu der Vorrichtung gemäß Fig. 3,

Fig. 6 eine durch Weglassen von Vorrichtungsteilen gegenüber Fig. 5 vereinfachte Darstellung der Vorrichtung im Grundriß,

Fig. 7 einen Ausschnitt der Vorrichtung gemäß Fig. 5 im Grundriß, bei vergrößertem Maßstab,

Fig. 8 eine Queransicht bzw. einen Querschnitt in der Schnittebene VIII-VIII zu Fig. 5,

Fig. 9 eine Queransicht auf einen Teil der Vorrichtung in der Ebene IX-IX der Fig. 5,

Fig. 10 eine Ausschnittdarstellung analog Fig. 8 bei veränderter Stellung der Faltorgane in vergrößertem Maßstab,

Fig. 11 einen Zuschnitt analog zu Fig. 1 nach Bildung von Schrägkanten (zweifach abgewinkelt),

Fig. 12 eine Stirnansicht bzw. einen Querschnitt des Zuschnitts gemäß Fig. 11,

Fig. 13 eine Einzelheit der Vorrichtung im Querschnitt bzw. in Stirnansicht zur Bildung von Schrägkanten (Zuschnitt gemäß Fig. 11 und 12),

Fig. 14 eine Darstellung entsprechend Fig. 13 einer anderen Ausführungsform der Vorrichtung zur Formung von Zuschnitten gemäß Fig. 11 und 12,

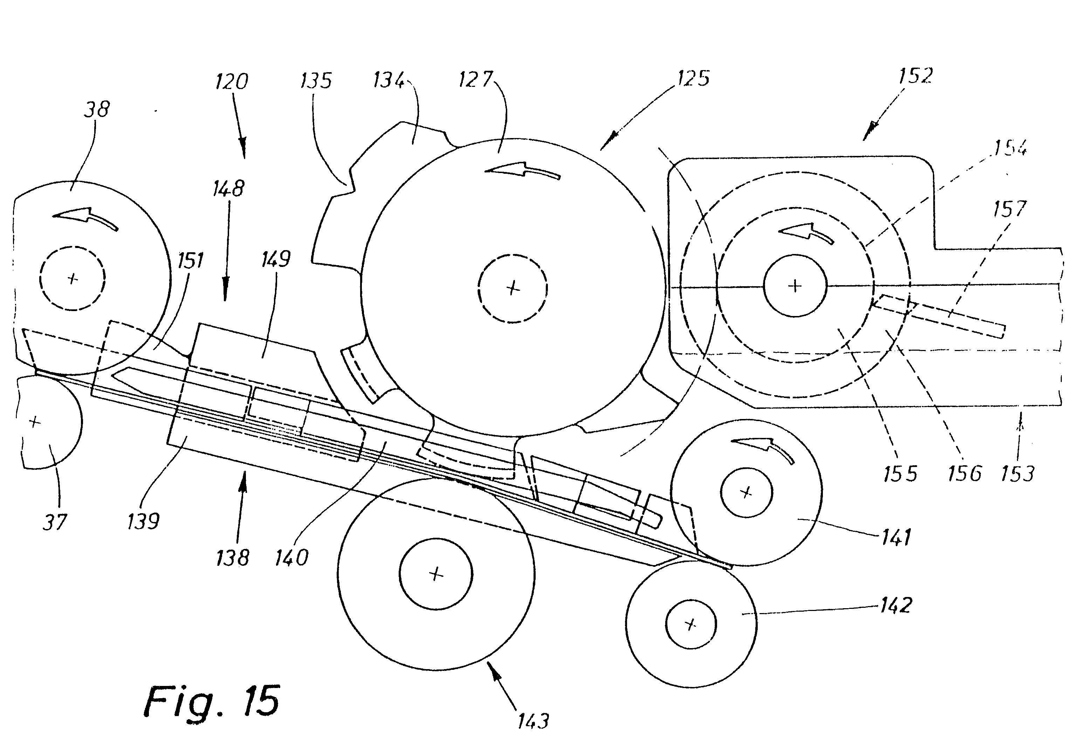

Fig. 15 eine an die Faltstation gemäß Fig. 3 bis 14 anschließende Leimstation in vereinfachter Seitenansicht,

Fig. 16 die Leimstation gemäß Fig. 15 im Grundriß,

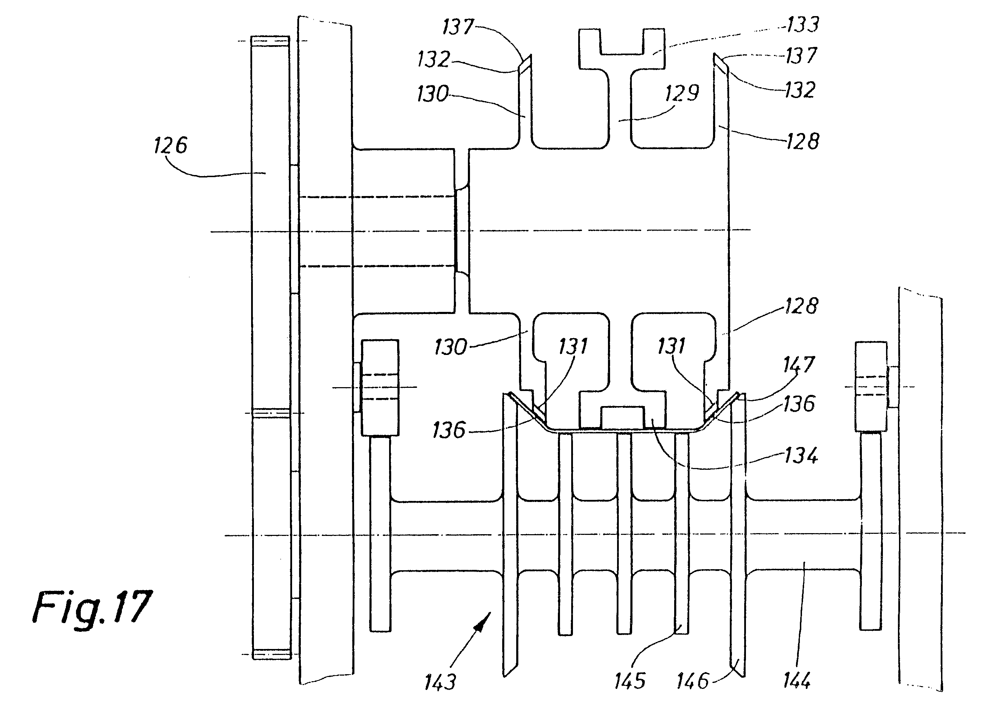

Fig. 17 eine Queransicht der Leimstation,

Fig. 18 eine weitere Queransicht bzw. einen Querschnitt im Bereich eines Mundstücks,

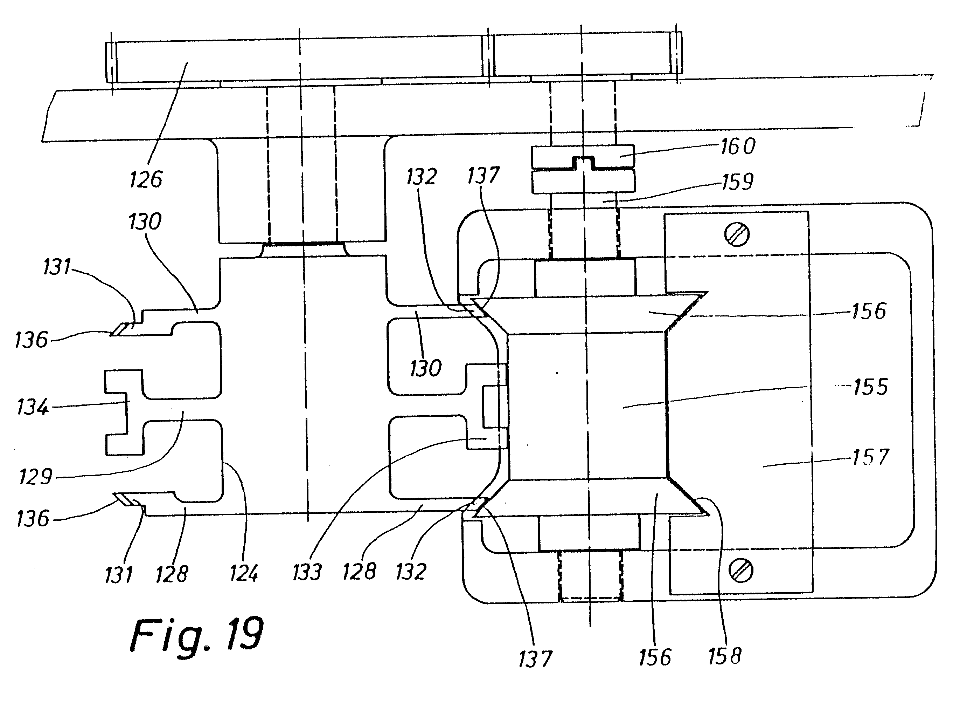

Fig. 19 eine Einzelheit eines Leimaggregats im Grundriß.

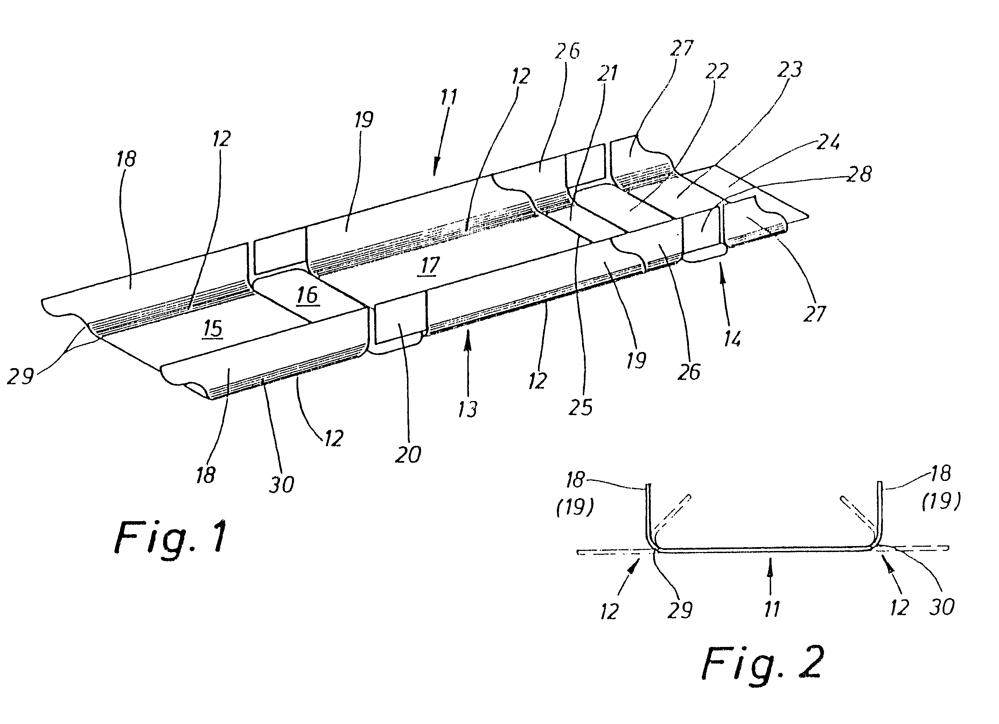

Die in den Zeichnungen dargestellten Ausführungsbeispiele von Packungen (Zuschnitten) und Vorrichtungen beziehen sich auf zwei Gestaltungsbeispiele für (Zigaretten-)Packungen in der Ausführung einer Klappschachtel (Hinge-Lid-Packung). In Fig. 1 und 2 ist ein Zuschnitt 11 gezeigt, der mit abgerundeten Längskanten 12 ausgebildet ist, und zwar durchgehend im Bereich eines Schachtelteils 13 und eines Deckels 14.

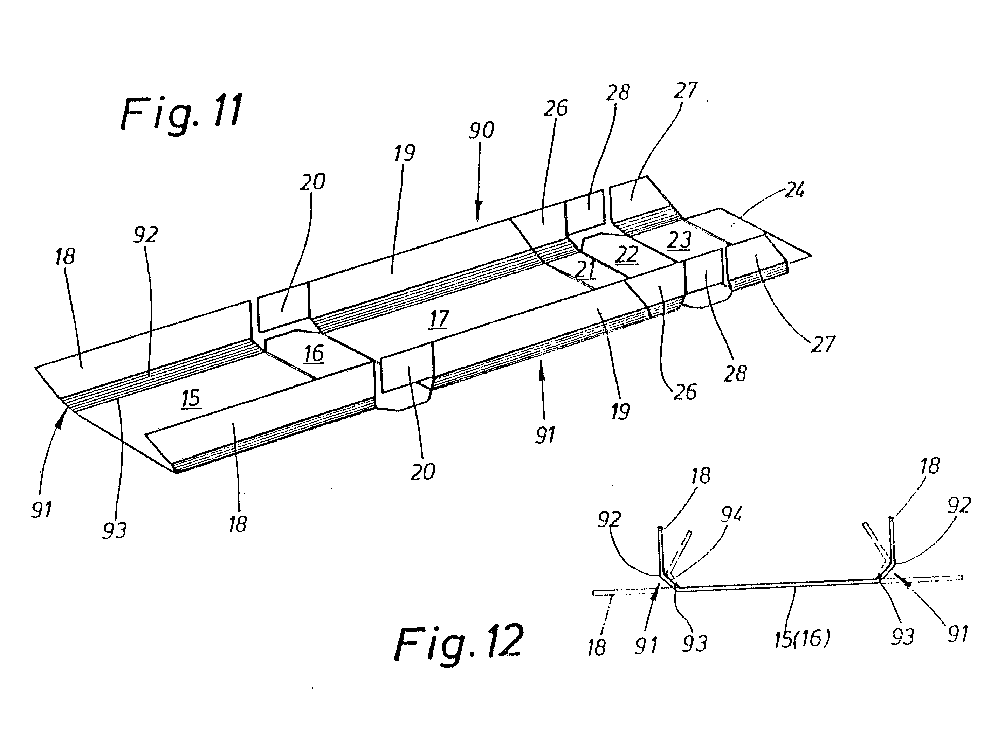

Der Zuschnitt gemäß Fig. 11 und 12 zeigt einen im Prinzip ähnlich aufgebauten Zuschnitt 90 mit abgeschrägten Längskanten 91.

Der jeweils in Fig. 1 und Fig. 11 langgestreckte, nur in bezug auf die Längskanten 12, 91 vorgeformte Zuschnitt bildet fertiggefaltet in an sich üblicher Weise einen Schachtelteil 13 und einen Deckel 14.

Aufgrund der Gestaltung des Zuschnitts 11 sind in Längsrichtung aufeinanderfolgend im mittleren Bereich eine Vorderwand 15, eine Bodenwand 16 und eine Rückwand 17 als zum Schachtelteil 13 gehörend gebildet. An die Vorderwand 15 und Rückwand 17 schließen seitlich jeweils Seitenlappen 18 und 19 an, die bei der fertiggefalteten Klappschachtel paarweise einander überdecken und Seitenwände bilden. Im Bereich der Bodenwand 16 sind Bodenecklappen 20 vorgesehen, die aber nicht mit der Bodenwand 16 verbunden, sondern Fortsetzungen der Seitenlappen 19 sind.

Zur Bildung des Deckels 14 sind Deckelrückwand 21, Oberwand 22, Deckelvorderwand 23 und ein Verstärkungslappen 24 aufeinanderfolgend in Längsrichtung des Zuschnitts 11 gebildet. Die Deckelrückwand 21 ist über ein Scharnier 25 mit der Rückwand 17 des Schachtelteils 13 verbunden. Deckelrückwand 21 und Deckelvorderwand 23 sind jeweils Deckelseitenlappen 26 und 27 in analoger Weise zu den Seitenlappen 18 und 19 zugeordnet. Ein Deckelecklappen 28 ist jeweils als Verlängerung der Deckelseitenlappen 26 im Bereich der Oberwand 22 vorgesehen.

Die Längskanten 12 bzw. 90 erstrecken sich jeweils zwischen Vorderwand 15 einerseits und den zu beiden Seiten angrenzenden Seitenlappen 18 andererseits, zwischen Rückwand 17 und den Seitenlappen 19, zwischen Deckelrückwand 21 und den Deckelseitenlappen 26 sowie zwischen Deckelvorderwand 23 und den anschließenden Deckelseitenlappen 27 andererseits.

Zur Bildung abgerundeter Längskanten 12 (Rundkanten) sind streifenförmige Materialbereiche, nämlich Kantenstreifen 29 und 30, die sich jeweils aus randseitigen Bereichen der aneinandergrenzenden Wandungen bzw. Lappen ergeben, dauerhaft bogenförmig (viertelkreisbogenförmig) geformt. Wie dargestellt, werden die Seitenlappen 18, 19 bzw. die Deckelseitenlappen 26, 27 aus der flachen Position des Zuschnitts 11 heraus aufgerichtet in eine im wesentlichen senkrechte Position (Fig. 2) unter Bildung der abgerundeten Längskanten 12. Die vorgenannten seitlichen Teile der Zuschnitte 11 werden dabei, wie in Fig. 2 durch strichpunktierte Linien angedeutet, über die aufrechte Endposition hinweg bewegt, nämlich überbrochen. Durch die vorhandenen Rückstellkräfte bewegen sich sodann die Seitenlappen 18, 19 und Deckelseitenlappen 26, 27 in die aufrechte Position zurück. In analoger Weise werden die (polygonalen) Längskanten 91 der Packung gemäß Fig. 11 und 12 geformt.

Der so vorbereitete Zuschnitt 11 wird danach in einer geeigneten, konventionellen Verpackungsmaschine unter Aufnahme des Packungsinhalts weiterverarbeitet.

Die Vorrichtung zum Herstellen der abgerundeten Längskanten 12 (Rundkanten) ist in die Förderbahn der Zuschnitte 11 eingebaut. Im Bereich einer Formstation 31 werden die voranstehend beschriebenen Verformungen der seitlichen Zuschnitteile während einer momentanen Stillstandsphase ausgeführt. Zu diesem Zweck sind in der Formstation 31 Form- bzw. Prägewerkzeuge vorgesehen. Es handelt sich dabei um bewegbare Faltorgane sowie um ortsfeste Gegenfaltorgane. Bei dem dargestellten Ausführungsbeispiel sind langgestreckte, im Querschnitt kreisförmige Faltwalzen 32 und 33 seitlich zu einer Zuschnittbahn 34 angeordnet. Auf letzterer wird der Zuschnitt 11 in die Formstation 31 transportiert und aus dieser abgefördert. Für den Transport der Zuschnitte 11 bis in die Formstation 31 sowie unmittelbar nach Verlassen derselben sind drehend angetriebene Paare von Zugscheiben 35 und 36 bzw. 37 und 38 jeweils unmittelbar benachbart zur Eintrittsseite bzw. zur Austrittsseite der Formstation 31 angeordnet. Die Zuschnitte 11 laufen jeweils zwischen den einander zugeordneten Zugscheiben 35 und 36 bzw. 37 und 38 hindurch.

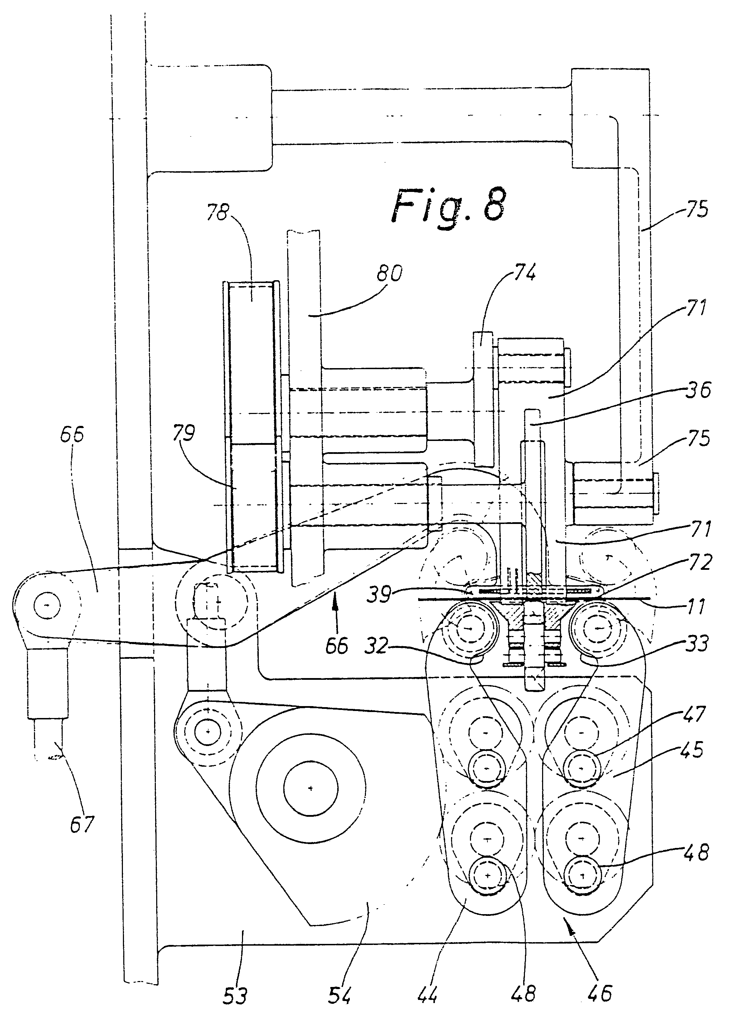

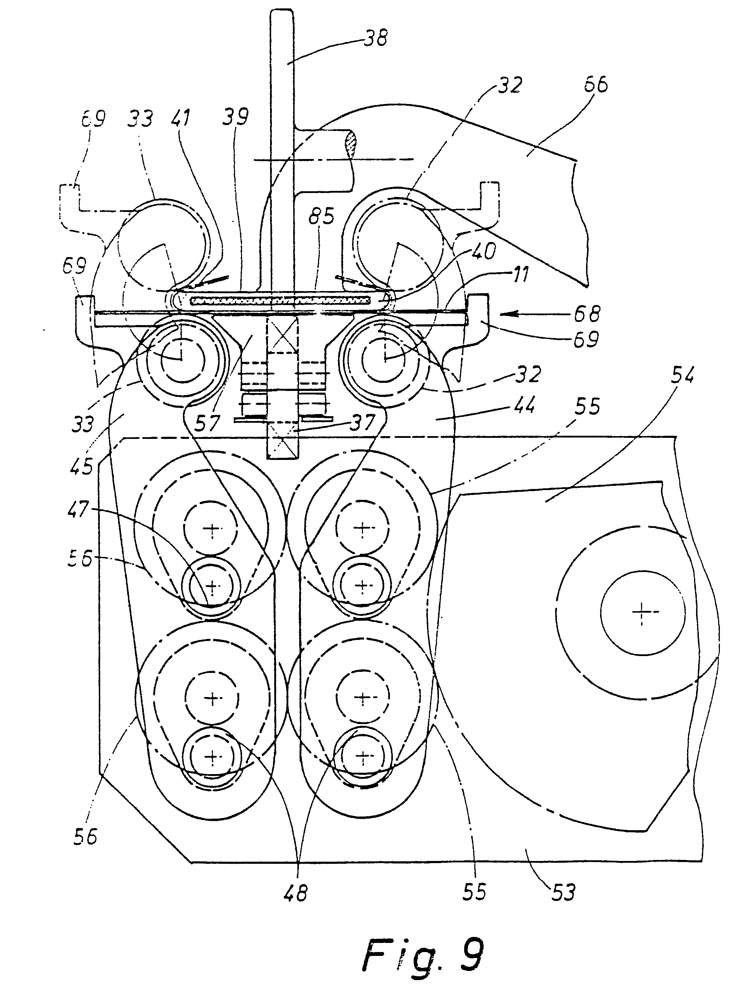

Den Faltwalzen 32 und 33 sind während der Formgebung bzw. Faltung unbewegliche Gegenfaltorgane zugeordnet, und zwar bei dem vorliegenden Ausführungsbeispiel eine durchgehende, einstückige Formplatte 39, die annähernd die Länge des gesamten Zuschnitts 11 hat und von oben her auf den mittleren Bereich desselben abgesenkt wird. Die Formplatte 39 dient dabei zugleich der zeitweiligen Fixierung des Zuschnitts 11 in einer exakten Position innerhalb der Formstation 31. Die Formplatte 39 ist in ihrer Breite so bemessen, daß die (kreisbogenförmig) abgerundeten, in Längsrichtung verlaufenden Formränder 40 und 41 als Gegenformwerkzeug zu den Faltwalzen 32, 33 dienen können, derart, daß die Kantenstreifen 29 und 30 unter bogenförmiger Verformung um die Formränder 40, 41 herumgeformt werden können. Die betreffenden Teile des Zuschnitts 11 werden dabei an die Formränder 40, 41 der Formplatte 39 durch die Faltwalzen 32, 33 angedrückt. Diese werden zu diesem Zweck aus einer unteren Ausgangsposition gemäß Fig. 8 bzw. 9 (ausgezogene Linien) in eine obere Position (strichpunktierte Linien) bewegt. Die Faltwalzen 32, 33 werden dabei längs einer kreisbogenförmigen Bahn um die Formränder 40, 41 unter Mitnahme der Zuschnitteile (Seitenlappen 18, 19 bzw. Deckelseitenlappen 26, 27) bewegt unter Andrücken derselben an die Formränder 40, 41. In der Ausgangsstellung befinden sich demnach die Faltwalzen 32, 33 unterhalb des Zuschnitts 11.

Die Faltwalzen 32 sind bei dem vorliegenden Ausführungsbeispiel um die eigene Längsachse drehbar gelagert. Zu diesem Zweck sind an den Enden axial gerichtete Lagerbohrungen 42 angebracht, in die ein Lagerzapfen 43 eines Walzenhalters eintritt.

Vor jedem Ende einer Faltwalze 32, 33 ist ein Tragarm 44, 45 für jede Faltwalze 32, 33 verstellbar gelagert. Die Tragarme 44, 45 sind mit einem Stellgetriebe 46 verbunden, welches die bereits beschriebene Bewegung der Faltwalzen 32, 33 bewirkt. Zur Durchführung der ausschließlich translatorischen Bewegung der Tragarme 44, 45 sind die je einer Faltwalze 32, 33 zugeordneten Tragarme 44 bzw. 45 durch zwei Kurbeltriebe 47 und 48 betätigbar, die am Ende jeweils einer gemeinsamen Antriebswelle 49, 50 angebracht sind. Die Kurbeltriebe 47, 48 bestehen jeweils aus einer Kurbelscheibe 51 mit einem Kurbelzapfen 52, der drehbar in dem Tragarm 44 bzw. 45 gelagert ist.

Die Antriebswellen 49, 50 sind in einer zum Maschinengestell gehörenden Tragwandung 53 gelagert. Je zwei Antriebswellen 49, 50 werden durch ein Zahnsegment 54 hin- und herdrehend angetrieben. Deren Antrieb wird über Zahnräder 55 auf korrespondierende Zahnräder 56 der benachbarten Antriebswellen übertragen. Durch dieses Getriebe führen die Faltwalzen 32, 33 stets gleiche, synchron ablaufende Bewegungen aus. Wie ersichtlich, werden die Faltwalzen 32, 33 unter Mitnahme der Seitenlappen 18, 19 bzw. Deckelseitenlappen 26, 27 so weit bewegt, daß diese Zuschnitteile über die aufrechte Stellung hinweg bis nahezu in eine horizontale Position bewegt werden (überbrechen). Durch Rückstellkräfte gelangen die genannten Lappen sodann in die aufrechte Stellung gemäß Fig. 2.

Die Zuschnittbahn 34 ist mindestens im Bereich der Formstation 31 mit deutlich geringerer Breite ausgebildet als der Zuschnitt 11 bzw. als Vorderwand 15, Rückwand 17 etc. desselben. Die Zuschnittbahn 34 besteht aus einem langgestreckten Tragprofil 57 mit sich nach unten verjüngendem, trapezförmigem Querschnitt. Im Bereich eines unteren Stegs 58 sind die unteren Zugscheiben 35, 37 der Zugscheibenpaare gelagert, und zwar unter elastischem Andrücken an die gegenüberliegende, obere Zugscheibe 36 bzw. 38. Zu diesem Zweck ist ein Innenteil 59 der Zugscheibe 35 bzw. 37 außermittig über einen Tragzapfen 60 in einer entsprechenden Lagerbohrung des Stegs 58 gelagert. Ein ebenfalls am Innenteil 59 außermittig angebrachter weiterer Tragzapfen 61 wird durch ein Federorgan, nämlich eine Blattfeder 62, im Sinne eines ständigen, elastischen Andrückens in Aufwärtsrichtung belastet. Auf dem Innenteil 59 läuft drehbar ein äußerer Drehring 63. Dieser tritt durch eine Spaltöffnung 64 in dem Tragprofil 57 sowie durch eine Ausnehmung 65 im Bereich der Eintrittsseite der Formstation 31 hindurch.

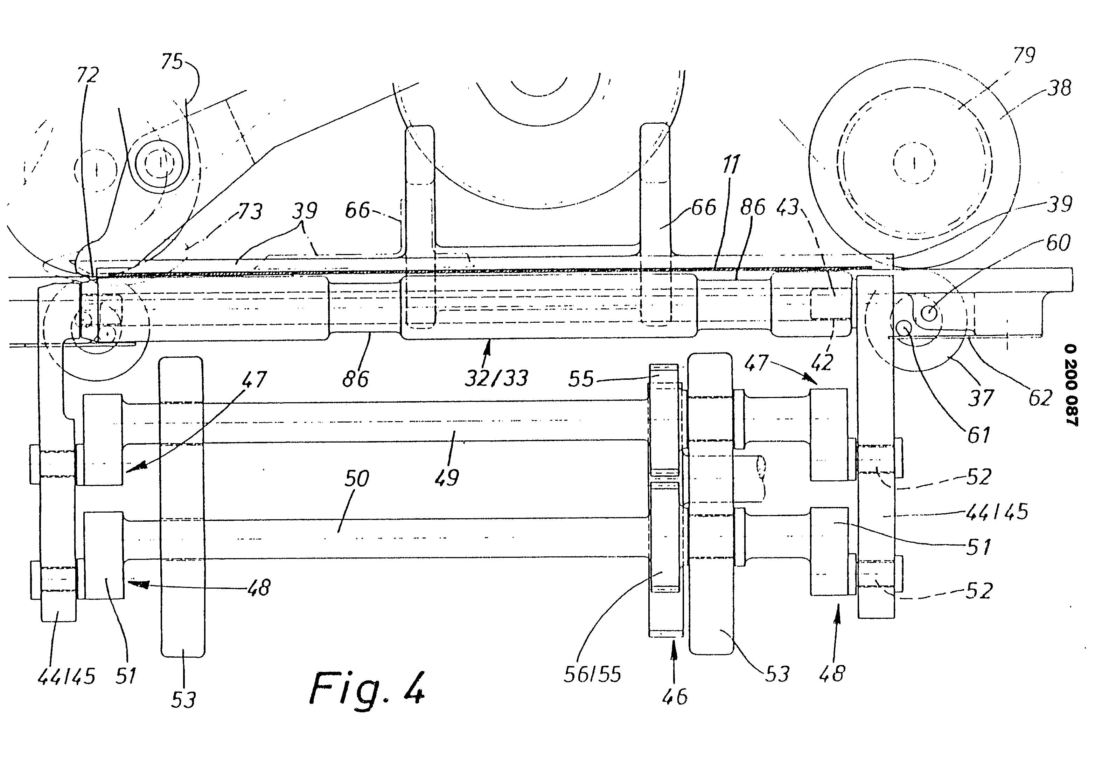

Die Formplatte 39 wird jeweils nur um einen geringen Hub von wenigen Millimetern auf- und abbewegt (ausgezogene und strichpunktierte Stellung in Fig. 4). Zur Betätigung dient ein zweiarmiger Hubhebel 66, der durch eine Betätigungsstange 67 in schwenkendem Sinne verstellbar ist.

Der Zuschnitt findet innerhalb der Formstation 31 Aufnahme in einer Zuschnitt-Aufnahme 68, und zwar exakt formschlüssig ausgerichtet. Die Zuschnittaufnahme 68 besteht aus zwei winkelförmigen Anschlagstücken 69, die den Zuschnitt 11 in einem in Förderrichtung vorn liegenden Bereich seitlich sowie an der Vorderseite passend — entsprechend den Konturen des Zuschnitts 11 — umfassen. Insbesondere kommen die Anschlagstücke 69 jeweils an durch den schmaleren Verstärkungslappen 24 vorstehenden Deckelseitenlappen 27 mit einer Schulter 70 zur Anlage und bestimmen dadurch die Relativstellung in Längsrichtung.

Die Anschlagstücke 69 sind bei dem vorliegenden Ausführungsbeispiel mit den vorn liegenden Tragarmen 44 und 45 verbunden, werden durch diese folglich mit angehoben (Fig. 9). Nach dem Absenken der Formplatte 39 auf den Zuschnitt 11 und Fixieren desselben auf dem Tragprofil 57 der Zuschnittbahn 34 haben die Anschlagstücke 69 ihre Funktion erfüllt.

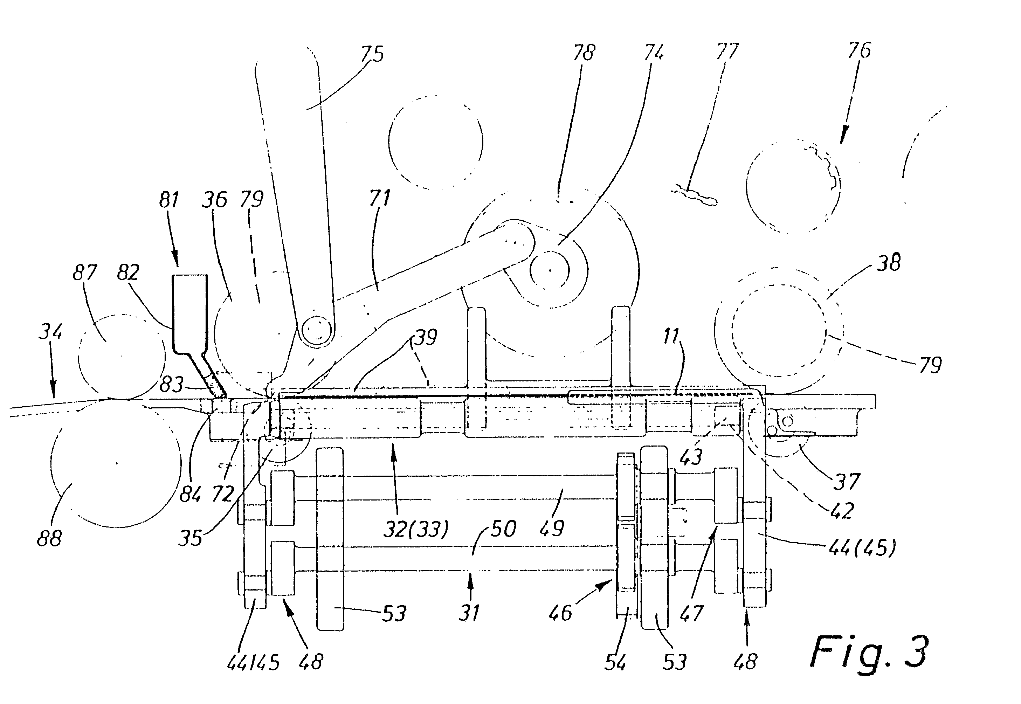

Im Bereich der Formstation 31 befindet sich der Zuschnitt 11 außer Eingriff mit den Zugscheiben 35, 36 bzw. 37, 38. Für den Weitertransport des Zuschnitts 11 nach Durchführung der Formung bzw. Faltung bis zum Erfassen durch die Zugscheiben 37, 38 ist ein besonderer, taktweise zur Wirkung kommender Förderer vorgesehen. Dieser besteht aus einem Raffarm 71, der mit einer Mitnehmernase 72 während eines Förderhubs den Zuschnitt 11 an dessen Rückseite erfaßt (Fig. 3) und den Zuschnitt 11 längs einer kurzen Förderstrecke transportiert. Die Mitnehmernase 72 des ständig bewegten Raffarms 71 bewegt sich dabei längs einer flachen, geschlossenen Bewegungsbahn 73 (Fig. 4).

Der Raffarm 71 wird zur Durchführung dieser Bewegungen durch eine ständig umlaufende Kurbel 74 angetrieben und durch einen benachbart zur Mitnehmernase 72 angelenkten Schwenkarm 75 gehalten.

Wie insbesondere aus Fig. 3 ersichtlich, wird eine Anzahl der beschriebenen Organe durch einen gemeinsamen Antrieb, im vorliegenden Falle durch einen Zahnriementrieb 76, bewegt. Ein gemeinsamer Zahnriemen 77 läuft über Antriebsscheiben und Umlenkscheiben sowie über eine Kurbelantriebsscheibe 78 für den Antrieb des Raffarms 71 und über den Zugscheiben 36 und 38 zugeordnete Zahnscheiben 79. Die vorgenannter Antriebsorgane sind an bzw. In einer gemeinsamen Haltewand 80 gelagert. Die Bewegung des Raffarms 71 ist mit der der Faltwalzen 32, 33 abgestimmt.

Die Verformbarkeit des aus dunner Pappe od. dgl. bestehenden Zuschnitts 11 im Bereich der Kantenstreifen 29, 30 kann durch Befeuchten oder durch Auftragen einer Leimschicht verbessert werden. Zu diesem Zweck sind bei dem gezeigten Ausführungsbeispiel vor der Eintrittseite in die Formstation 31 Flüssigkeitsbehälter 82 mit Austrittskanal und in diesem angeordnetem Übertragungsdocht 83. Letzterer wird fortwährend mit Flüssigkeit getrankt. Das untere Ende liegt auf dem Zuschnitt 11 im Bereich der Kantenstreifen 29, 30 während des Transports auf und übertragt dadurch die Flüssigkeit. Im Bereich des Übertragungsdochtes 83 ist die Zuschnittbahn 34 mit einer Bohrung 84 versehen, durch die etwaige Flüssigkeitstropfen hindurchtreten können, wenn kein Zuschnitt 11 gefördert wird.

Des weiteren kann die Formbarkeit bzw. die Formhaltbarkeit des Zuschnitts 11 durch Wärmeaufwendung verbessert werden. Zu diesem Zweck ist bei dem gezeigten Ausführungsbeispiel die Formplatte 39 mit einem flachen Heizelement 85, z. B. einem elektrischen Widerstand, versehen.

Die Arbeitsweise der Vorrichtung ist derart, daß nach dem Einfördern eines Zuschnitts 11 in die Formstation 31 die Formplatte 39 abgesenkt wird. Sodann erfolgt die beschriebene Aufwärts- bzw. Formbewegung der Faltwalzen 32, 33. Nach Rückkehr derselben in die Ausgangsstellung wird die Formplatte 39 geringfügig angehoben. Zugleich kommt der Raffarm 71 mit der Mitnehmernase 72 in Eingriff mit dem Zuschnitt 11 und bewegt diesen weiter, derart daß ein vorderer Bereich des Zuschnitts 11 von den Zugscheiben 37, 38 erfaßt wird.

Die Faltwalzen 32, 33 sind bei dem vorliegenden Ausführungsbeispiel im Bereich der Bodeneckklappen 20 sowie der Deckelecklappen 28 mit einer Eindrehung 86, also mit geringerem Durchmesser ausgebildet, so daß hier keine Verformung des Zuschnitts 11 stattfindet.

Außerhalb des Bereichs der Formstation 31 werden die Zuschnitte 11 in geeigneten Abständen voneinander in üblicher Weise transportiert. Wie aus Fig. 3 ersichtlich, ist hierfür beispielsweise ein weiteres Paar von Zugscheiben 87, 88 mit Abstand vor der Formstation 31 angeordnet.

Bei der Packung bzw. dem Zuschnitt gemäß Fig. 11 und 12 sind die zu den Längskanten 12 des vorstehenden Ausführungsbeispiels korrespondierenden Längskanten 91 abgeschrägt bzw. polygonal ausgebildet, und zwar durch zweimaliges Abknicken des Zuschnitts 90 in diesem Bereich. Es entstehen dadurch im Bereich der gesamten (gedachten) Längskante 91 zwei Polygonalkanten 92 und 93. Zwischen den Polygonalkanten 92, 93 entsteht demnach ein schräg « über Eck » sich erstreckender Zuschnittstreifen 94. Die durch diesen einerseits sowie durch die angrenzenden Zuschnittbereiche andererseits eingeschlossenen Winkel sind vorzugsweise gleich groß (135°).

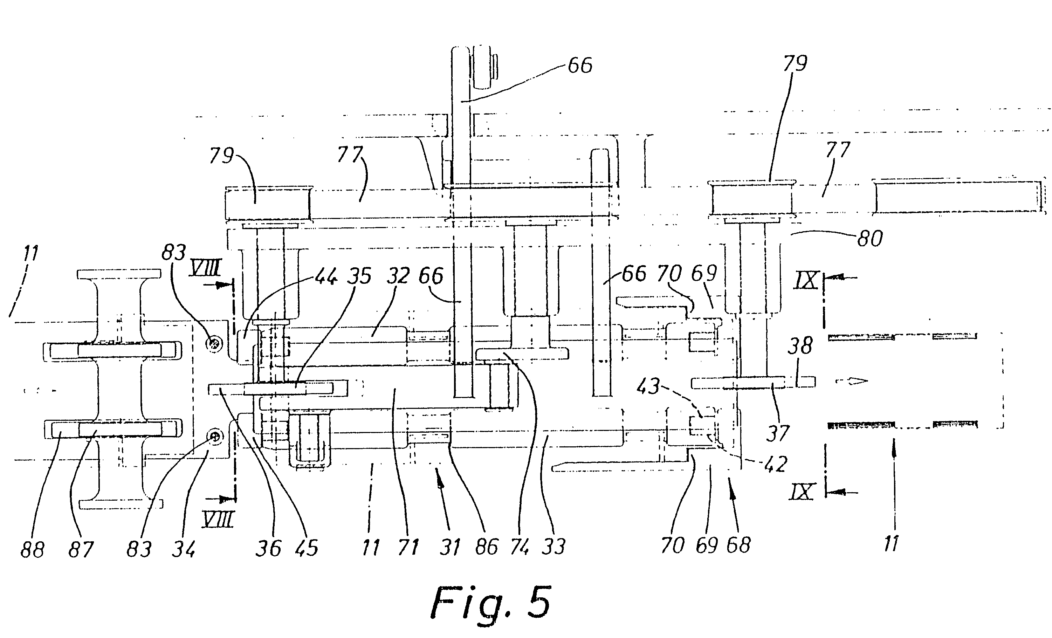

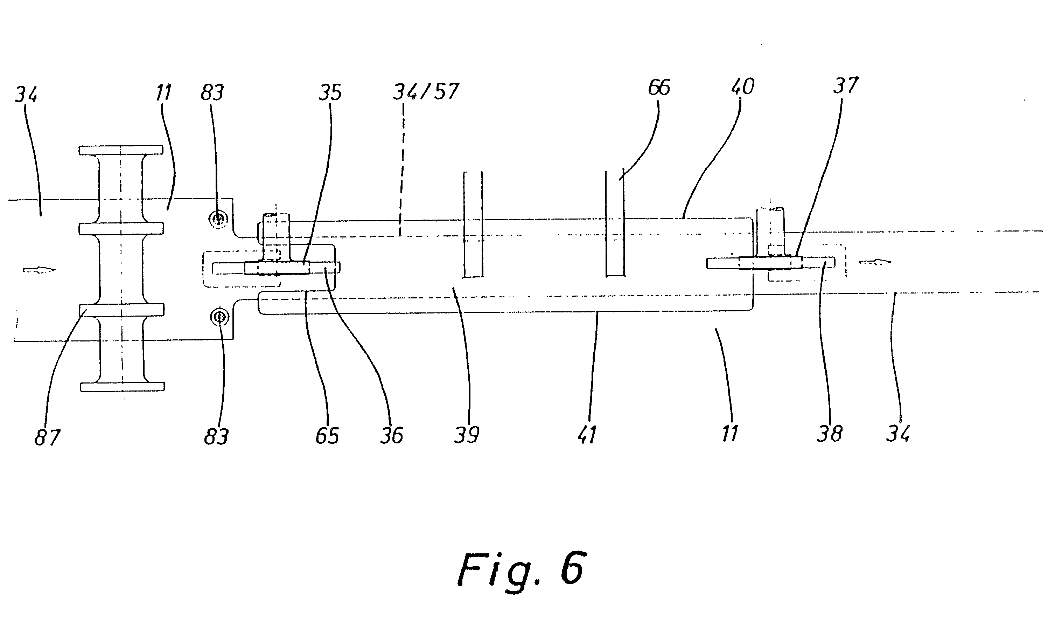

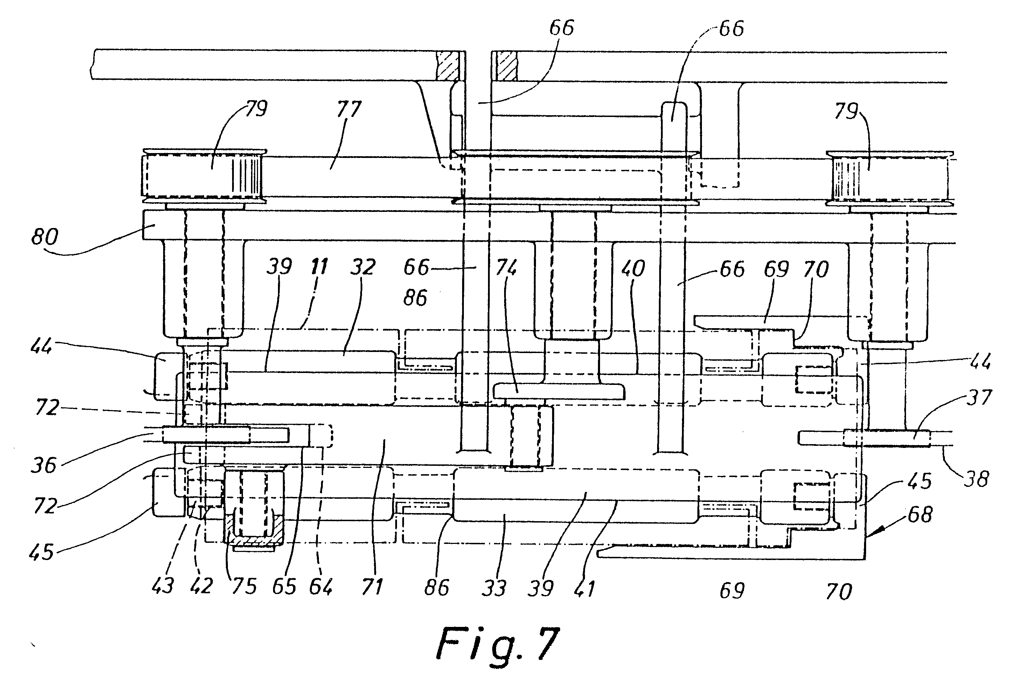

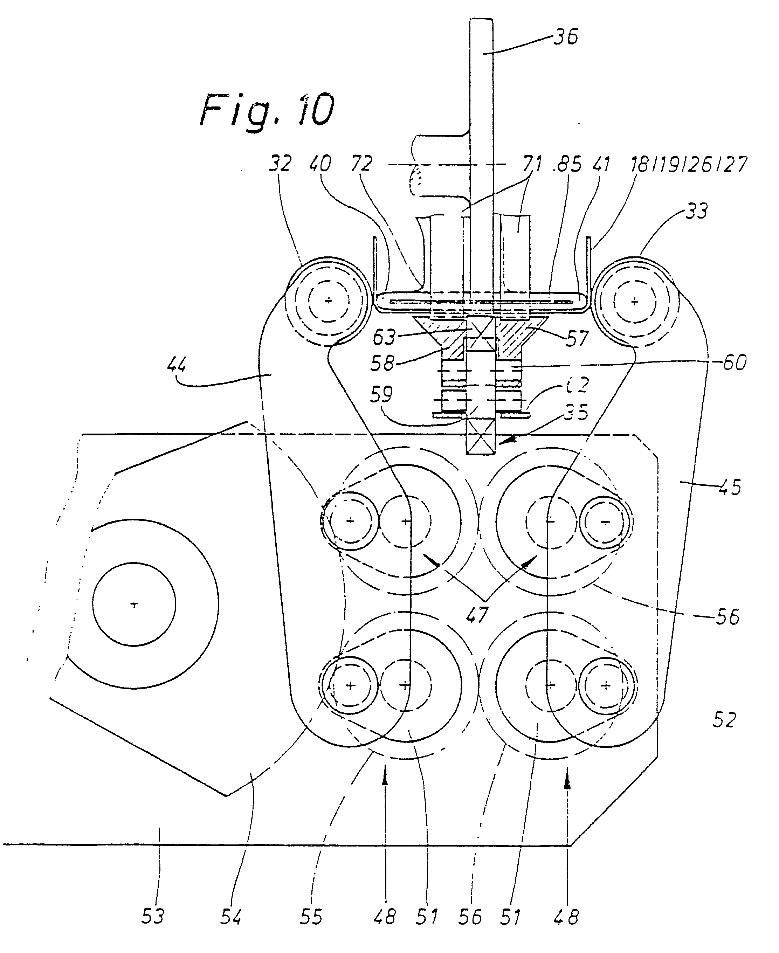

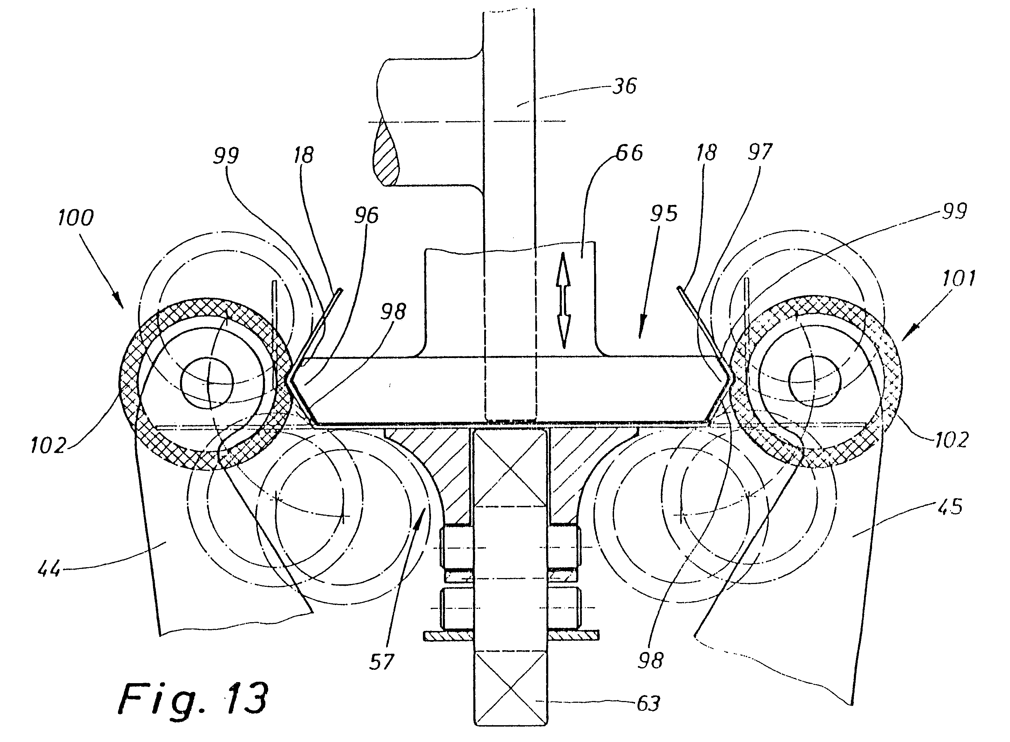

Ein so ausgebildeter Zuschnitt 90 wird vorzugsweise in gleicher Weise vorgeformt wie bereits beschrieben und in der Fig. 11 und 12 dargestellt. Eine hierfür geeignete Vorrichtung analog zu dem Ausführungsbeispiel der Fig. 3-10 ist mit einer auf den Zuschnitt 90 aufsetzbaren Formplatte 95 ausgerüstet, deren Formränder 96 und 97 abgewinkelte Formflächen 98, 99 entsprechend der Gestaltung der in eine Winkelposition zueinander zu formenden Zuschnitteile aufweisen. Im vorliegenden Falle ist demnach eine untere Formfläche 98 vorgesehen, die zur Formung des Zuschnittstreifens 94 dient und eine unter einem Winkel hieran anschließende Formfläche 99 für den angrenzenden Zuschnitteil (Seitenlappen, Deckelseitenlappen...). Die Winkelstellung der Formflächen 98, 99 ist derart, daß ein Überbrechen bei der Formung der Zuschnittbereiche erfolgt (Fig. 12 und 13), insbesondere betragen die die Stellung der Formflächen bestimmenden Winkel je 120°.

Als Gegenfaltorgane sind hier die im Prinzip bereits beschriebenen und in gleicher Weise betätigten Faltwalzen 100 und 101 vorgesehen, die eine elastische Ummantelung 102, z. B. aus Gummi oder Kunststoff, aufweisen zur exakten Anformung der Zuschnitteile an die Formränder 96, 97 der Formplatte 95.

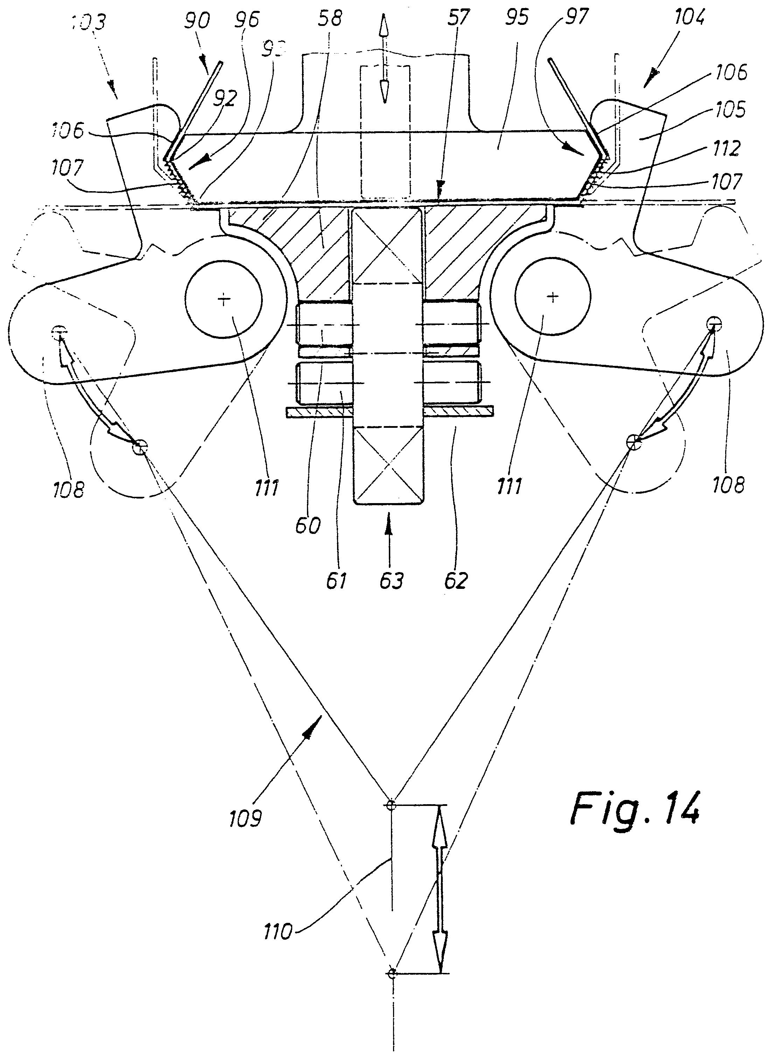

Fig. 14 zeigt eine Alternative für die Ausbildung der Vorrichtung im Bereich der Falt- und Gegenfaltorgane. Die gezeigte Lösung ist auf einen Zuschnitt gemäß Fig. 11 und 12 abgestellt, also mit abgeschrägten Längskanten 91. Bei entsprechender Anpassung der Faltorgane ist diese Vorrichtung aber auch für das Ausführungsbeispiel der Fig. 1 und 2 anwendbar.

Wie bei den beschriebenen Ausführungsbeispielen ist auch hier eine Formplatte 95 vorgesehen mit sich in Längsrichtung erstreckenden Formrändern 96, 97, die im vorliegenden Falle unter einem Winkel zueinander gerichtete Formflächen 98, 99, wie bei dem Ausführungsbeispiel der Fig. 13, aufweisen. Als äußere Gegenfaltorgane sind hier sich in Längs- bzw. Förderrichtung erstreckende Faltleisten 103, 104 vorgesehen. Diese bestehen aus einem Faltschenkel 105, der auf der Formplatte 95 zugekehrten Seite das Profil der Formränder 96, 97 aufweist, also mit korrespondierenden Gegenformflächen 106, 107 versehen ist. Die Faltleisten 103, 104 bzw. der Faltschenkel 105 werden mit den Gegenformflächen 106, 107 unter Anformung des Zuschnitts 90 an die Formränder 96, 97 der Formplatte 95 durch entsprechende Querbewegung angedrückt. Dabei werden die Polygonalkanten 92, 93 geformt.

Bei dem gezeigten Ausführungsbeispiel sind die Faltleisten 103, 104 als zweiarmiger Hebel ausgebildet, nämlich mit einem seitwärts abstehenden Betätigungsschenkel 108. Die Faltleisten 103, 104 erhalten dadurch insgesamt einen winkelförmigen Querschnitt.

Die Betätigungsschenkel 108 der beiden Faltleisten 103, 104 sind mit einem gemeinsamen, auf- und abbewegbaren Betätigungsgestänge 109 verbunden, welches jeweils gelenkig an die Betätigungsschenkel 108 anschließt. Von diesem Betätigungsgestänge 109 sind hier lediglich die Mittellinien von miteinander verbundenen Stangen gezeigt. Eine mittlere, nach unten weisende Schubstange 110 wird zur Durchführung gemeinsamer Schwenkbewegungen der Faltleisten 103, 104 um ein zentrales, mit der Achse sich in Längsrichtung erstreckendes Schwenklager 111 durch ein geeignetes Antriebsorgan auf- und abbewegt. In der Ausgangsstellung liegen die Faltschenkel 105 unmittelbar unterhalb der Ebene des (ausgebreiteten) Zuschnitts 90.

Bei dem vorliegenden Ausführungsbeispiel ist die dem Zuschnittstreifen 94 zugeordnete Gegenformfläche 107 mit Längsrillen 112 ausgebildet. Durch diese werden entsprechende Rillen in den Zuschnitt 90 im Bereich des Zuschnittstreifens 94 eingeformt.

Im übrigen ist auch diese Vorrichtung in gleicher Weise ausgebildet wie die beschriebene.

An die vorstehend beschriebenen Ausführungsbeispiele einer Einrichtung zum Vorfalten der Zuschnitte schließt eine Leimstation 120 an. Diese dient zum Auftragen von Leimstellen 121 im Bereich der Bodenecklappen 20, von Leimstellen 122 im Bereich der Seitenlappen 19 und von weiteren Leimstellen 123 im Bereich des Verstärkungslappens 24 und der Deckelvorderwand 23. Weitere rechteckige Leimstellen 124 werden im Bereich der Vorderwand 15 angebracht. Alle Leimstellen werden an der nach oben weisenden Innenseite des Zuschnitts 11 aufgetragen.

Die vorgenannten Leimstellen 121... 124 werden bei dem gezeigten Ausführungsbeispiel der Leimstation 122 durch ein einziges, gemeinsames Organ aufgetragen, nämlich durch eine Leimwalze 125. Diese ist seitlich im Maschinengestell drehbar gelagert und über ein Hauptzahnrad 126 angetrieben. Auf einem zylindrischen Walzenkörper 127 sind in Umfangsrichtung verlaufende Tragscheiben 128, 129 und 130 mit axialem Abstand voneinander angeordnet. An den Außenumfängen dieser Tragscheiben 128... 130 sind Leimauftragsorgane angebracht, die mit den betreffenden Oberflächen des Zuschnitts 11 in Berührung gebracht werden.

Die außenliegenden Tragscheiben 128 und 130 sind mit absatzartig nach innen versetzten Leimsegmenten 131 versehen, die sich längs eines Teilumfangs erstrecken und zum Aufbringen der Leimstellen 122 dienen. Auf derselben Tragscheibe 128 bzw. 130 sind in Umfangsrichtung versetzt Leimsegmente 132 gebildet, die zum Auftragen der Leimstellen 121 dienen.

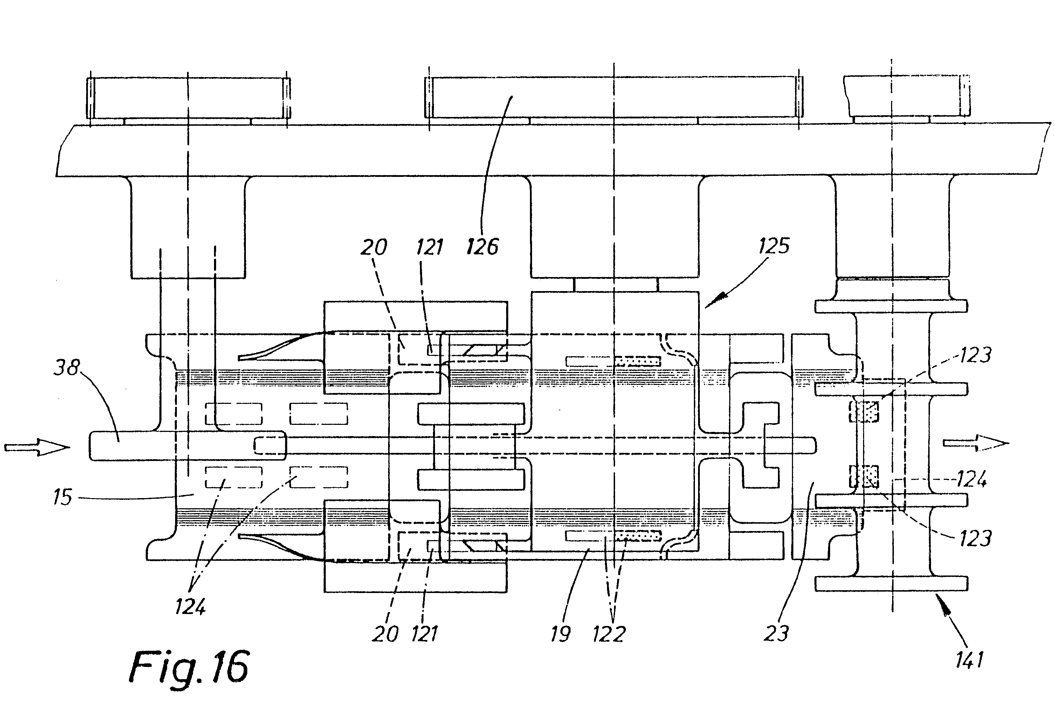

Die Leimstellen 123 werden durch ein U-förmig ausgebildetes Leimsegment 133 mit zwei Schenkeln aufgetragen. Auf derselben Tragscheibe 129 ist in Umfangsrichtung versetzt ebenfalls ein U-förmiges Leimsegment 134 angebracht, welches in Umfangsrichtung durch einen Einschnitt 135 unterteilt ist, so daß dieses Leimsegment insgesamt vier Leimübertragungsflächen bildet. Die Relativstellung der Leimsegmente 131... 134 sowie deren Gestaltung und Abmessung in Umfangsrichtung sind so gewählt, daß die in Fig. 16 dargestellten Leimbilder erzeugt werden.

Während die Leimsegmente 133 und 134 im mittleren Bereich der Leimwalze 125 mit ebenen bzw. zylinderförmigen Leimauftragsflächen ausgebildet sind, weisen die Leimauftragsflächen 136 und 137 der außenliegenden Leimsegmente 131 und 132 eine konische, nämlich nach außen schräg abfallende Gestalt auf. Diese konischen Leimauftragsflächen 136 und 137 kommen im Bereich von Seitenlappen 18, 19 bzw. im Bereich des Bodenecklappens 20 zur Wirkung, während diese Zuschnitteile in einer schräg aufgerichteten, V-förmigen Position fixiert sind. Die Gestaltung der Leimauftragsflächen 136, 137 sowie deren Winkelstellung sind dabei an die Winkelstellung der Seitenlappen 18, 19 angepaßt, demnach etwa unter einem Winkel von 45° gerichtet.

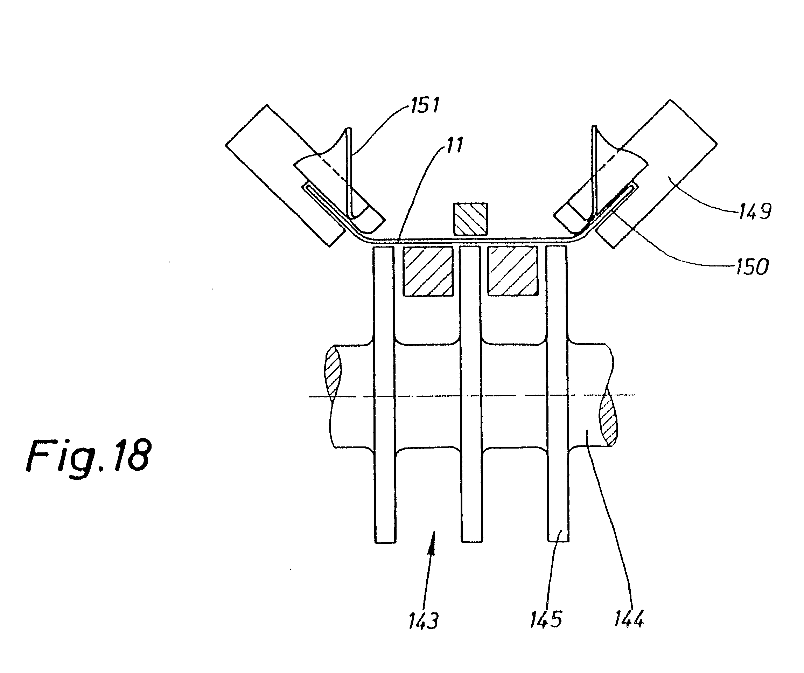

Die in den oben beschriebenen Stationen vorgeformten bzw. vorgefalteten Zuschnitte 11 werden in der Leimstation 120 auf einer schräg abwärtsgerichteten Packungsbahn 138 gefördert. Diese besteht aus einer Unterführung 139 aus zwei im Abstand voneinander angeordneten Tragstäben (Fig. 18) sowie einer Oberführung 140 aus einem einzelnen, gegenüber den Stäben der Unterführung 139 versetzten Führungsstab. Zwischen diesen wird der mittlere Bereich der Zuschnitte 11 gefördert.

Der Transport der Zuschnitte nach dem Formen bzw. Vorfalten wird zunächst durch die Zugscheiben 37, 38 am Ende der Falteinrichtung bzw. am Eingang der Leimstation 120 übernommen. Am Ausgang der Leimstation 120 sind weitere Zugwalzen 141 und 142 angeordnet, die den Weitertransport der Zuschnitte übernehmen. Der Abstand dieser Zugwalzen 141, 142 von den Zugscheiben 37, 38 ist geringer als die Länge eines Zuschnitts 11.

Der Leimwalze 120 gegenüberliegend, nämlich unterhalb der Zuschnitte 11, befindet sich eine Gegenwalze 143. Diese besteht aus einzelnen auf einer gemeinsamen Gegenwelle 144 angeordneten Gegenscheiben 145 und 146. Die Gegenscheiben sind in der Gestaltung, Abmessung und Anordnung auf die Tragscheiben 128... 130 bzw. Leimsegmente 131... 134 der Leimwalze 125 abgestimmt, und zwar derart, daß Leimsegmente 131... 134 bzw. deren Leimauftragsflächen 136, 137 jeweils etwa mittig zwischen zwei benachbarten Gegenscheiben 145, 146 angeordnet sind. Die äußeren Gegenscheiben 146 sind seitlich neben den äußeren Leimsegmenten 131 und 132 angeordnet und mit schrägen bzw. konischen Umfangsflächen 147 zur Abstützung der schrägliegenden Seitenlappen 18, 19 versehen.

Der Leimwalze 125 ist ein Führungsorgan für die Zuschnitte 11 vorgeordnet, nämlich ein Mundstück 148. Dieses besteht aus einem Mundstückkörper 149 mit schrägliegenden Führungsschlitzen 150 zur Aufnahme und Führung der schräggerichteten Teile des Zuschnitts 11 (Seitenlappen 18, 19...). Die Führungsschlitze 150 sind entsprechend der Stellung der Zuschnitteile bei der Beaufschlagung mit Leim in einer Ebene von 45° liegend.

Zu den Führungsschlitzen 150 führen Leitorgane in Gestalt von geschwungenen Leitblechen 151. Diese sind so gestaltet und angeordnet, daß die bei der Vorformung aufgerichteten seitlichen Zuschnitteile (Seitenlappen 18, 19...) in ein der Position der Führungsschlitze 150 entsprechende Winkelstellung gedrückt werden. Die Leitbleche 151 führen zu der Eingangsseite der Führungsschlitze 150.

Neben der Leimwalze 125 befindet sich ein Leimaggregat 152. Dieses besteht aus einem Leimtopf 153 von prinzipiell bekannter Bauart. In dem Leimtopf 153 ist eine Leimübertragungswalze 154 drehbar gelagert. Diese taucht teilweise in den sich in dem Leimtopf 153 befindenden Leim ein und nimmt auf der Oberfläche eine Leimschicht mit. Die Leimsegmente 131... 134 kommen während der Drehung der Leimwalze 125 mit der ebenfalls drehend angetriebenen Leimübertragungswalze 154 in Berührung, derart, daß Leim auf die Leimauftragsflächen übertragen werden kann.

Die Leimübertragungswalze 154 ist entsprechend der Gestaltung der Leimwalze 125 bzw. der Leimsegmente 131... 134 garnrollenartig ausgebildet, nämlich mit einem zylindrischen Mittelteil 155 und seitlichen Konusteilen 156. Letztere sind mit etwa unter 45° gerichteten Leimübertragungsflächen versehen, korrespondierend zu den Leimauftragsflächen 136, 137 der äußeren Leimsegmente 131, 132.

Innerhalb des Leimtopfes 153 ist ein Abstreifer 157 eingebaut. Dieser ist in den Konturen der Gestaltung der Leimübertragungswalze 154 angepaßt, nämlich mit dreieckförmigen Ausnehmungen 158.

Zu Reinigungszwecken kann die Leimübertragungswalze 154 dem Leimtopf 153 entnommen werden. Zu diesem Zweck ist eine Antriebswelle 159 der Leimübertragungswalze 154 mit einer Kupplung 160 versehen.

## Patentansprüche

1. Verfahren zum Herstellen von im wesentlichen quaderförmigen Packungen, insbesondere Zigaretten-Packungen in der Ausführung als Klappschachtel, bestehend aus Boden- und Oberwand, (schmalen) Seitenwänden sowie Vorder- und Rückwand, dadurch gekennzeichnet, daß zur Bildung abgerundeter oder abgeschrägter Längskanten (12, 91) im Bereich zwischen Vorder- oder Rückwand (15, 17) einerseits sowie den Seitenwänden andererseits ein ausgebreiteter Zuschnitt (11, 90) im Bereich jeweils eines gemeinsamen, randseitigen Kantenstreifens (29, 30) bzw. eines Zuschnittstreifens (94) von Vorderwand oder Rückwand (15, 17) einerseits sowie damit verbundenen Seitenwänden bzw. Seitenlappen (18, 19 ; 26, 27) andererseits bogenförmig bzw. unter zweimaligem Abwinkeln geformt wird.

2. Verfahren nach Anspruch 1, dadurch gekennzeichnet, daß die zu beiden Längsseiten von Vorderwand (15) und Rückwand (17) angeordneten Seitenlappen (18, 19) sowie Deckelseitenlappen (26, 27) über eine (aufgerichtete) 90°-Stellung hinweg unter Bildung einer (kreis-)bogenförmigen bzw. polygonalen Umlenkung geformt werden.

3. Verfahren nach Anspruch 1 oder 2, dadurch gekennzeichnet, daß alle Seitenlappen (18, 19) sowie Deckelseitenlappen (26, 27) des Zuschnitts (11, 90) gleichzeitig unter Bildung abgerundeter bzw. abgeschrägter Längskanten (12, 91) geformt werden.

4. Verfahren nach Anspruch 1 sowie einem oder mehreren der weiteren Ansprüche, dadurch gekennzeichnet, daß der Zuschnitt (11, 90) vor der Verformung wenigstens im Bereich der herzustellenden Rundkanten bzw. Schrägkanten (im Bereich von Kantenstreifen 29, 30 oder Zuschnittstreifen 94) angefeuchtet und/oder mit Leim beschichtet und/oder während der Herstellung der Rundkanten bzw. Schrägkanten mit Wärme beaufschlagt wird.

5. Verfahren nach Anspruch 1, dadurch gekennzeichnet, daß in einer Schrägstellung der Seitenlappen (18, 19) sowie der Deckelseitenlappen (26, 27) Leim auf die Seitenlappen und/oder Deckelseitenlappen sowie gegebenenfalls auf weitere Zuschnitteile aufgetragen wird.

6. Vorrichtung zum Herstellen von im wesentlichen quaderförmigen Packungen, insbesondere Zigaretten-Packungen in der Ausführung als Klappschachtel, aus einem Zuschnitt mit Bodenwand, Oberwand, Seitenwänden sowie Vorder- und Rückwand, dadurch gekennzeichnet, daß seitlich abstehende Seitenlappen (18, 19) und ggf. Deckelseitenlappen (26, 27) durch bewegbare Formwerkzeuge (Faltwalzen 32, 33 ; 100, 101 ; Faltleisten 103, 104 ; Formplatte 39 ; 95) um wenigstens 90° verformbar bzw. aufrichtbar sind, wobei die Seitenlappen (18, 19) bzw. Deckelseitenlappen (26, 27) um feststehende Gegenwerkzeuge (Formplatte 39, 95) mit abgerundeten bzw. polygonalen Formflächen bzw. Formrändern (40, 41 ; 96, 97) formbar sind.

7. Vorrichtung nach Anspruch 6, dadurch gekennzeichnet, daß die Faltorgane zum Aufrichten bzw. Falten der Seitenlappen (18, 19) bzw. Deckelseitenlappen (26, 27) stabförmig ausgebildet sind, vorzugsweise als um die eigene Längsachse drehbare Faltwalzen (32, 33 ; 100, 101), wobei die Faltorgane unter Mitnahme der Seitenlappen (18, 19) bzw. Deckelseitenlappen (26, 27) um ein Gegenfaltorgan, insbesondere eine Formplatte (39, 95), unter Andrücken bzw. Anlegen an Formränder (40, 41 ; 96, 97) derselben, im wesentlichen längs eines Bogens (Kreisbogen) bzw. über Kanten der Formränder (96, 97) bewegbar sind.

8. Vorrichtung nach Anspruch 6 oder 7, dadurch gekennzeichnet, daß das Gegenfaltorgan als Formplatte (39, 95) mit abgerundeten bzw. bogenförmigen oder polygonalen Formrändern (40, 41 ; 96, 97) ausgebildet ist und die Faltwalzen (32, 33 ; 100, 101) von der Unterseite des Zuschnitts (11, 90) her unter Mitnahme der Seitenlappen (18, 19) bzw. Deckelseitenlappen (26, 27) (kreis-)bogenförmig unter Abkantung um die Formränder (40, 41 ; 96, 97) herum zur Oberseite bewegbar sind.

9. Vorrichtung nach Anspruch 6 sowie einem oder mehreren der weiteren Ansprüche, dadurch gekennzeichnet, daß bei Ausgestaltung eines Zuschnitts (11, 90) derart, daß Vorderwand (15), Bodenwand (16), Rückwand (17), Deckelrückwand (21), Oberwand (22) und Deckelvorderwand (23) in Längsrichtung aufeinanderfolgend angeordnet sind, die seitlich abstehenden Seitenlappen (18, 19) bzw. Deckelseitenlappen (26, 27) je durch ein gemeinsames, durchgehendes Faltorgan (Faltwalze 32, 33 ; 100, 101 ; Faltleisten 103, 104) mit entsprechendem Gegenfaltorgan (Formplatte 39 ; 95) unter Bildung der Rundkanten oder Schrägkanten formbar sind.

10. Vorrichtung nach Anspruch 9, dadurch gekennzeichnet, daß das Gegenfaltorgan, nämlich die Formplatte (39 ; 95), sich über die gesamte Länge des Zuschnitts (11, 90) mindestens im Bereich von Seitenlappen (18, 19) und Deckelseitenlappen (26, 27) erstreckt sowie auf- und abbewegbar ist.

11. Vorrichtung nach Anspruch 7, dadurch gekennzeichnet, daß die Faltwalzen (32, 33 ; 100, 101) im Bereich der Bodenwand (16) sowie der Oberwand (22) Unterbrechungen aufweisen, insbesondere Querschnittsminderungen (Eindrehungen 86).

12. Vorrichtung nach Anspruch 6 sowie einem oder mehreren der weiteren Ansprüche, dadurch gekennzeichnet, daß die Faltorgane (Faltwalzen 32, 33 ; 100, 101 ; Faltleisten 103, 104) durch ein gemeinsames Stellgetriebe (46, 109) gleichzeitig und synchron bewegbar sind.

13. Vorrichtung nach Anspruch 12 sowie einem oder mehreren der weiteren Ansprüche, dadurch gekennzeichnet, daß die Faltwalzen (32, 33 ; 100, 101) mit ihren Enden (drehbar) an Walzenträgern, nämlich Tragarmen (44, 45) gelagert sind, die paarweise einander gegenüberliegend je einer Faltwalze (32, 33 ; 100, 101) zugeordnet und je durch zwei Kurbeltriebe (47, 48) über entsprechende Antriebswellen (49, 50) gemeinsam bewegbar sind.

14. Vorrichtung nach Anspruch 6 sowie einem oder mehreren der weiteren Ansprüche, dadurch gekennzeichnet, daß Zuschnitte (11, 90) aufeinanderfolgend auf einer Zuschnittbahn (34) in eine Formstation (31) forderbar und nach Durchführung der Faltungen bzw. Formungen aus dieser abförderbar sind.

15. Vorrichtung nach Anspruch 14 sowie einem oder mehreren der weiteren Ansprüche, dadurch gekennzeichnet, daß die Zuschnitte (11, 90) außerhalb der Formstation (31) durch Zugwalzen bzw. Paare von Zugscheiben (35, 36 ; 37, 38) förderbar sind und aus der Formstation (31) heraus durch ein gesondertes, taktweise wirkendes Förderorgan weiterbewegbar sind.

16. Vorrichtung nach Anspruch 15 sowie einem oder mehreren der weiteren Ansprüche, dadurch gekennzeichnet, daß der sich in der Formstation (31) in Ruhestellung befindende Zuschnitt (11, 90) durch einen ständig umlaufenden Raffarm (71) mit Mitnehmernase (72) an der Rückseite nach Durchführung der Verformungen erfaßbar und längs eines Abschnitts förderbar ist, wobei der Raffarm (71) vorzugsweise durch eine ständig umlaufende Kurbel (74) antreibbar ist.

17. Vorrichtung nach Anspruch 15 und 16, dadurch gekennzeichnet, daß die Zugscheiben (35, 36 ; 37, 38) und der Raffarm (71) bzw. dessen Kurbel (74) durch ein gemeinsames Getriebe ständig angetrieben sind, insbesondere durch einen Zahnriementrieb (76).

18. Vorrichtung nach Anspruch 14 sowie einem oder mehreren der weiteren Ansprüche, dadurch gekennzeichnet, daß die Zuschnittbahn (34) im Bereich der Formstation (31) aus einem Tragprofil (57) besteht, das eine geringere Breite bzw. Auflagerfläche als der Zuschnitt (11, 90) bzw. als Vorderwand (15) und Rückwand (17) desselben aufweisen, wobei die Zugscheiben (35, 36 bzw. 37, 38) durch eine Spaltöffnung (64) in dem Tragprofil (57) hindurchtreten.

19. Vorrichtung nach Anspruch 6 sowie einem oder mehreren der weiteren Ansprüche, dadurch gekennzeichnet, daß die Faltorgane und Gegenfaltorgane, insbesondere Faltwalzen (32, 33 ; 100, 101) bzw. Faltleisten (103, 104) und/oder die Formplatte (39, 95) beheizbar sind, vorzugsweise durch Anordnung eines Heizelements (85) in der Formplatte (39, 95).

20. Vorrichtung nach Anspruch 6 sowie einem oder mehreren der weiteren Ansprüche, dadurch gekennzeichnet, daß der Formstation (31) Flüssigkeitsauftragorgane (81) zum Auftragen von Flüssigkeiten auf den Zuschnitt (11, 90) im Bereich der Kantenstreifen (29, 30) vorgeordnet sind, wobei ein aus einem Flüssigkeitsbehälter (82) austretender Übertragungsdocht (83) im Bereich der Kantenstreifen (29, 30) auf dem Zuschnitt (11, 90) aufliegt.

21. Vorrichtung nach Anspruch 10 sowie einem oder mehreren der weiteren Ansprüche, dadurch gekennzeichnet, daß der Raffarm (71) durch eine Ausnehmung (65) in der Formplatte (39, 95) hindurchtritt.

22. Vorrichtung nach Anspruch 6 sowie einem oder mehreren der weiteren Ansprüche, dadurch gekennzeichnet, daß der Zuschnitt (11, 90) in der Formstation (31) an seinem vorderen Ende durch Anschlagorgane fixiert ist, insbesondere durch winkelförmige Anschlagstücke (69) mit wenigstens einer quergerichteten Schulter (70), die an einem entsprechenden Absatz des Zuschnitts (11, 90) formschlüssig Anlage erhält.

23. Vorrichtung nach Anspruch 6 sowie einem oder mehreren der weiteren Ansprüche, dadurch gekennzeichnet, daß die Formränder (40, 41 ; 96, 97) der Formplatte (39, 95) und/oder die Faltwalzen (32, 33 ; 100, 101) bzw. die Faltleisten (103, 104) auf der dem Zuschnitt (11, 90) zugekehrten Seite mit sich in Längsrichtung erstreckenden Profilierungen, insbesondere Längsrillen (112), Riefen od. dgl. versehen sind.

24. Vorrichtung nach Anspruch 6 sowie einem oder mehreren der weiteren Ansprüche, dadurch gekennzeichnet, daß die Faltwalzen (32, 33 ; 100, 101) mit einer Ummantelung (102) aus elastischem Werkstoff versehen sind.

25. Vorrichtung nach Anspruch 6 sowie einem oder mehreren der weiteren Ansprüche, dadurch gekennzeichnet, daß die äußeren Formwerkzeuge, insbesondere sich in Längsrichtung (Förderrichtung) erstreckende Faltleisten (103, 104), quer zur Formplatte (95) bewegbar, insbesondere schwenkbar sind.

26. Vorrichtung nach Anspruch 25, dadurch gekennzeichnet, daß die Formleisten (103, 104) im Querschnitt als zweiarmiger (Winkel-)Hebel ausgebildet sind und entsprechend den Formrändern (96, 97) der Formplatte (95) ausgebildete Formflächen (98, 99) aufweisen.

27. Vorrichtung nach Anspruch 26, dadurch gekennzeichnet, daß die Formplatte (95) Formränder (96, 97) mit unter einem Winkel zueinander angeordneten Formflächen (98, 99) aufweist, die unter einem kleineren Winkel zueinander gerichtet sind (z. B. um einen Winkel von 120°) als die Wandungen des Zuschnitts (90) im Bereich der Längskanten (91).

28. Vorrichtung nach Anspruch 25 sowie einem oder mehreren der weiteren Ansprüche, dadurch gekennzeichnet, daß beide Faltleisten (103, 104) durch ein gemeinsames Betätigungsgestänge (109) gleichzeitig in schwenkendem Sinne betätigbar sind.

29. Vorrichtung nach Anspruch 6 sowie einem oder mehreren der weiteren Ansprüche, dadurch gekennzeichnet, daß im Anschluß an die Formwerkzeuge (32, 33 ; 100, 101 ; 103, 104 ; 39, 45) der Zuschnitt (11) im Bereich einer Leimstation (120) durch Leimrollen (Leimsegmente 131, 132, 133, 134) mit Leim beaufschlagbar ist, wobei die Leimrollen entsprechend der Schrägstellung der Seitenlappen (18, 19) mit schräggerichteten Leimauftragsflächen (136, 137) versehen sind.

30. Vorrichtung nach Anspruch 29, dadurch gekennzeichnet, daß die Leimrollen als Leimsegmente (131... 134) einer gemeinsamen Leimwalze (125) ausgebildet sind, wobei die Leimsegmente (131... 134) jeweils am Außenumfang von auf einem Walzenkörper (127) angeordneten Tragscheiben (128, 129, 130) angebracht sind.

31. Vorrichtung nach Anspruch 29 oder 30, dadurch gekennzeichnet, daß auf der Leimwalze (125) seitliche Leimsegmente (131, 132) für die schräggerichteten Seitenlappen (18, 19) und im mittleren Bereich zylindrische Leimsegmente (133, 134) für die Beleimung von flachliegenden, mittleren Zuschnittbereichen angeordnet sind.

32. Vorrichtung nach Anspruch 29, dadurch gekennzeichnet, daß die Seitenlappen (18, 19) durch ein der Leimwalze (125) vorgeordnetes Mundstück (148) mit schräggerichteten Führungsschlitzen (150) für die Seitenlappen (18, 19) in der Schrägstellung ausrichtbar sind.

33. Vorrichtung nach Anspruch 29 sowie einem oder mehreren der weiteren Ansprüche, dadurch gekennzeichnet, daß eine Leimübertragungswalze (154) zur Übertragung von Leim aus einem Leimtopf (153) an die Leimsegmente (131... 134) entsprechend den Konturen derselben bzw. der Leimwalze (125) ausgebildet ist mit einem zylindrischen Mittelteil (155) und seitlichen Konusteilen (156).

34. Vorrichtung nach Anspruch 33, dadurch gekennzeichnet, daß ein im Leimtopf (153) angeordneter Abstreifer (157) der Kontur der Leimübertragungswalze (154) angepaßt ist.

## Claims

1. Process for producing essentially cuboid packs, especially cigarette packs of the hinge-lid type, consisting of a bottom wall and top wall, (narrow) side walls and a front and a rear wall, characterized in that, to form rounded or bevelled longitudinal edges (12, 91) in the region between the front or rear wall (15, 17) on the one hand and the side walls on the other hand, a spread-out blank (11, 90) is shaped in the form of an arc or by being angled twice in the region of a respective common marginal edge strip (29, 50) or of a blank strip (94) of the front wall or rear wall (15, 17), on the one hand, and side walls or side tabs (18, 19 ; 26, 27) connected to them, on the other hand.

2. Process according to Claim 1, characterized in that the side tabs (18, 19) and lid side tabs (26, 27) arranged on the two longitudinal sides of the front wall (15) and rear wall (17) are shaped beyond a (vertical) 90° position, to form a deflection in the form of a (circular) arc or polygonal.

3. Process according to Claim 1 or 2, characterized in that all the side tabs (18, 19) and lid side tabs (26, 27) of the blank (11, 90) are shaped simultaneously, to form rounded or bevelled longitudinal edges (12, 91).

4. Process according to Claim 1 and one or more of the further Claims, characterized in that, before shaping, the blank (11, 90) is moistened and/or coated with glue and/or is subjected to heat during the production of the round edges or bevelled edges at least in the region of the round edges or bevelled edges to be produced (in the region of edge strips 29, 30 or blank strips 94).

5. Process according to Claim 1, characterized in that, in an inclined position of the side tabs (18, 19) and of the lid side tabs (26, 27), glue is coated onto the side tabs and/or lid side tabs and, if appropriate, onto further blank parts.

6. Apparatus for producing essentially cuboid packs, especially cigarette packs of the hinge-lid type, from a blank with a bottom wall, top wall, side walls and a front and a rear wall, characterized in that laterally projecting side tabs (18, 19) and, if appropriate, lid side tabs (26, 27) can be shaped or erected through an angle of at least 90° by movable shaping tools (folding rollers 32, 33 ; 100, 101 ; folding strips 103, 104 ; shaping plate 39 ; 95), and the side tabs (18, 19) or lid side tabs (26, 27) can be shaped around fixed counter-tools (shaping plate 39, 95) with rounded or polygonal shaping surfaces or shaping margins (40, 41 ; 96, 97).

7. Apparatus according to Claim 6, characterized in that the folding members for erecting or folding the side tabs (18, 19) or lid side tabs (26, 27) are made bar-shaped, preferably as folding rollers (32, 33 ; 100, 101) rotatable about their own longitudinal axis, and the folding members, whilst taking up the side tabs (18, 19) or lid side tabs (26, 27), are movable round a counter-folding member, in particular a shaping plate (39, 95), thereby pressing against or coming up against shaping margins (40, 41 ; 96, 97) of the latter, essentially along an arc (circular arc) or over edges of the shaping margins (96, 97).

8. Apparatus according to Claim 6 or 7, characterized in that the counter-folding member is designed as a shaping plate (39, 95) with rounded, or arcuate, or polygonal shaping edges (40, 41 ; 96, 97), and the folding rollers (32, 33 ; 100, 101) are movable from the underside of the blank (11, 90), at the same time taking up the side tabs (18, 19) or lid side tabs (26, 27), along a (circular) arc around the shaping margins (40, 41 ; 96, 97) to the topside, thereby folding the said tabs.

9. Apparatus according to Claim 6 and one or more of the further Claims, characterized in that, when a blank (11, 90) is designed in such a way that the front wall (15), bottom wall (16), rear wall (17), lid rear wall (21), top wall (22) and lid front wall (23) are arranged in succession in the longitudinal direction, the laterally projecting side tabs (18, 19) or lid side tabs (26, 27) can each be shaped by a common continuous folding member (folding roller 32, 33, 100, 101 ; folding strips 103, 104) with a corresponding counter-folding member (shaping plate 39, 95), to form the round edges or bevelled edges.

10. Apparatus according to Claim 9, characterized in that the counter-folding member, namely the shaping plate (39, 95), extends over the entire length of the blank (11, 90), at least in the region of side tabs (18, 19) and lid side tabs (26, 27), and can be moved up and down.

11. Apparatus according to Claim 7, characterized in that the folding rollers (32, 33 ; 100, 101) have interruptions, in particular reductions in cross-section (turned grooves 86), in the region of the bottom wall (16) and top wall (22).

12. Apparatus according to Claim 6 and one or more of the further Claims, characterized in that the folding members (folding rollers 32, 33 ; 100, 101 ; folding strips 103, 104) are movable simultaneously and synchronously by means of a common actuating gear (46, 109).

13. Apparatus according to Claim 12 and one or more of the further Claims, characterized in that the folding rollers (32, 33 ; 100, 101) are mounted (rotatably) by means of their ends on roller carriers, namely supporting arms (44, 45), which are located opposite one another in pairs, each pair being assigned to a folding roller (32, 33 ; 100, 101), and which can each be moved jointly by means of two crank mechanisms (47, 48) via corresponding drive shafts (49, 50).

14. Apparatus according to Claim 6 and one or more of the further Claims, characterized in that blanks (11, 90) can be conveyed in succession on a blank track (34) into a shaping station (31) and can be conveyed out of the latter after the folding or shaping operations have been carried out.

15. Apparatus according to Claim 14 and one or more of the further Claims, characterized in that, outside the shaping station (31), the blanks (11, 90) can be conveyed by drawing rollers or pairs of drawing pulleys (35, 36 ; 37, 38) and can be moved further out of the shaping station (31) by means of a separate conveying member acting intermittently.

16. Apparatus according to Claim 15 and one or more of the further Claims, characterized in that the blank (11, 90), which is in the position of rest in the shaping station (31), can, after the shaping operations have been carried out, be grasped on the rear side by a constantly rotating gathering arm (71) with an carrier lug (72) and can be conveyed over a certain distance, and the gathering arm (71) can preferably be driven by a constantly rotating crank (74).

17. Apparatus according to Claims 15 and 16, characterized in that the drawing pulleys (35, 36 ; 37, 38) and the gathering arm (71) or its crank (74) are driven constantly by means of a common gear, in particular by means of a toothed-belt drive (76).

18. Apparatus according to Claim 14 and one or more of the further Claims, characterized in that, in the region of the shaping station (31), the blank track (34) consists of a supporting profile (57) which has a smaller width or bearing surface than the blank (11, 90) or than the front wall (15) and rear wall (17) of the latter, the drawing pulleys (35, 36 and 37, 38) passing through a slit orifice (64) in the supporting profile (57).

19. Apparatus according to Claim 6 and one or more of the further Claims, characterized in that the folding members and counter-folding members, in particular the folding rollers (32, 33 ; 100, 101) or folding strips (103, 104) and/or the shaping plate (39, 95), can be heated, preferably by arranging a heating element (85) in the shaping plate (39, 95).

20. Apparatus according to Claim 6 and one or more of the further Claims, characterized in that the shaping station (31) is preceded by liquid-coating members (81) for coating liquids onto the blank (11, 90) in the region of the edge strips (29, 30), and a transfer wick (83) projecting from a liquid container (82) rests on the blank (11, 90) in the region of the edge strips (29, 30).

21. Apparatus according to Claim 10 and one or more of the further Claims, characterized in that the gathering arm (71) passes through a recess (65) in the shaping plate (39, 95).

22. Apparatus according to Claim 6 and one or more of the further Claims, characterized in that, in the shaping station (31), the blank (11, 90) is fixed at its front end by stop members, in particular by angular stop pieces (69) with at least one transversely directed shoulder (70), which interlocks with a corresponding step of the blank (11, 90).

23. Apparatus according to Claim 6 and one or more of the further Claims, characterized in that the shaping margins (40, 41 ; 96, 97) of the shaping plate (39, 95) and/or the folding rollers (32, 33 ; 100, 101) or the folding strips (103, 104) are provided, on the side facing the blank (11, 90), with profilings, especially longitudinal grooves (112), scores or the like, which extend in the longitudinal direction.

24. Apparatus according to Claim 6 and one or more of the further Claims, characterized in that the folding rollers (32, 33 ; 100, 101) are provided with a sheathing (102) made of elastic material.

25. Apparatus according to Claim 6 and one or more of the further Claims, characterized in that the outer shaping tools, in particular folding strips (103, 104) extending in the longitudinal direction (conveying direction), are movable, especially pivotable, transversely relative to the shaping plate (95).

26. Apparatus according to Claim 25, characterized in that the shaping strips (103, 104) are designed, in cross-section, as two-armed (angle) levers and have shaping surfaces (98, 99) designed to match the shaping edges (96, 97) of the shaping plate (95).

27. Apparatus according to Claim 26, characterized in that the shaping plate (95) has shaping margins (96, 97) with shaping surfaces (98, 99) which are arranged at an angle relative to one another and which are directed towards one another at a smaller angle (for example, an angle of 120°) than the walls of the blank (90) in the region of the longitudinal edges (91).

28. Apparatus according to Claim 25 and one or more of the further Claims, characterized in that the two folding strips (103, 104) can be actuated simultaneously so as to pivot by means of a common actuating linkage (109).

29. Apparatus according to Claim 6 and one or more of the further Claims, characterized in that, following the shaping tools (32, 33 ; 100, 101 ; 103, 104 ; 39, 45), the blank (11) can receive glue in the region of a glueing station (120) by means of glue rolls (glue segments 131, 132, 133, 134), the glue rolls being provided with obliquely directed glue-coated surfaces (136, 137) according to the inclined position of the side tabs (18, 19).

30. Apparatus according to Claim 29, characterized in that the glue rolls are designed as glue segments (131 to 134) of a common glue roller (125), the glue segments (131 to 134) being attached respectively to the outer periphery of supporting discs (128, 129, 130) arranged on a roller body (127).

31. Apparatus according to Claim 29 or 30, characterized in that there are arranged on the glue roller (125) lateral glue segments (131, 132) for the obliquely directed side tabs (18, 19) and, in the middle region, cylindrical glue segments (133, 134) for coating glue onto middle blank regions lying flat.

32. Apparatus according to Claim 29, characterized in that the side tabs (18, 19) can be aligned with obliquely directed guide slots (150) for the side tabs (18, 19) in the inclined position by means of a mouth piece (148) preceding the glue roller (125).

33. Apparatus according to Claim 29 and one or more of the further Claims, characterized in that a glue transfer roller (154) for transferring glue from a glue pot (153) to the glue segments (131 to 134) is of a design corresponding to the contours of the latter or of the glue roller (125), with a cylindrical middle part (155) and lateral conical parts (156).

34. Apparatus according to Claim 33, characterized in that a scraper (157), arranged in the glue pot (153), matches the contour of the glue transfer roller (154).

**Revendications**

1. Procédé de fabrication d'emballages, pour l'essentiel en forme de parallélépipède rectangle, en particulier de paquets à cigarettes du type boîte à couvercle rabattant, constitués d'une paroi de fond, d'une paroi supérieure, de parois latérales (étroites), d'une paroi avant et d'une paroi arrière, caractérisé par le fait que, pour la formation d'arêtes longitudinales arrondies ou biseautées (12, 91) dans la zone entre la paroi avant ou arrière (15, 17), d'une part, et les parois latérales, d'autre part, on donne à un flan étalé (11, 90) une forme en arc ou avec double pliage, dans la zone d'une bande d'arête côté bord commune (29, 30) ou d'une bande de découpe (94) de la paroi avant ou la paroi arrière (15, 17), d'une part, et des parois latérales ou de pattes latérales (18, 19 ; 26, 27) jointes à cette paroi, d'autre part.

2. Procédé selon la revendication 1, caractérisé par le fait que les pattes latérales (18, 19) situées sur les deux côtés latéraux de la paroi avant (15) et de la paroi arrière (17) ainsi que des pattes latérales de couvercle (26, 27) sont déformées au-delà d'une position à 90° (relevée) avec formation d'une déviation en arc (de cercle) ou polygonale.

3. Procédé selon l'une des revendications 1 et 2, caractérisé par le fait que toutes les pattes latérales (18, 19) et les pattes latérales de couvercle (26, 27) du flan (11, 90) sont déformées simultanément avec formation d'arêtes longitudinales arrondies ou biseautées (12, 91).

4. Procédé selon la revendication 1 et une ou plusieurs des autres revendications, caractérisé par le fait que le flan (11, 90) est, avant la déformation, humecté et/ou revêtu de colle au moins dans la zone des arêtes arrondies ou biseautées à réaliser (dans la zone des bandes d'arête 29, 30 ou des bandes de découpe 94) et/ou est soumis à l'action de la chaleur pendant la réalisation des arêtes arrondies ou biseautées.

5. Procédé selon la revendication 1, caractérisé par le fait que dans une position oblique des pattes latérales (18, 19) et des pattes latérales de couvercle (26, 27), de la colle est appliquée sur les premières et/ou les secondes et éventuellement sur d'autres parties du flan.

6. Dispositif pour la fabrication d'emballages, pour l'essentiel en forme de parallélépipède rectangle, en particulier de paquets à cigarettes du type boîte à couvercle rabattant, à partir d'un flan, avec paroi de fond, paroi supérieure, parois latérales, paroi avant et paroi arrière, caractérisé par le fait que des pattes latérales (18, 19) et éventuellement des pattes latérales de couvercle (26, 27) saillant latéralement sont déformables ou relevables d'au moins 90° par des outils façonneurs mobiles (cylindres plieurs 32, 33 ; 100, 101 ; barrettes plieuses 103, 104 ; plaque façonneuse 39 ; 95), les pattes latérales (18, 19) ou les pattes latérales de couvercle (26, 27) pouvant être façonnées autour de contre-outils fixes (plaque façonneuse 39, 95) à surfaces façonneuses ou bords façonneurs arrondis ou polygonaux (40, 41 ; 96, 97).

7. Dispositif selon la revendication 6, caractérisé par le fait que les organes plieurs qui relèvent ou plient les pattes latérales (18, 19) ou les pattes latérales de couvercle (26, 27) sont en forme de barre et sont de préférence des cylindres plieurs (32, 33 ; 100, 101) pouvant tourner autour de leur axe longitudinal, ces organes plieurs pouvant être mus sensiblement le long d'un arc (de cercle) ou par-dessus des arêtes des bords façonneurs (96, 97) avec entraînement des pattes latérales (18, 19) ou des pattes latérales de couvercle (26, 27) autour d'un organe contre-plieur, en particulier d'une plaque façonneuse (39, 95), avec serrage ou appui contre des bords façonneurs (40, 41 ; 96, 97) de celle-ci.

8. Dispositif selon l'une des revendications 6 et 7, caractérisé par le fait que l'organe contre-plieur est une plaque façonneuse (39, 95) pourvue de bords façonneurs arrondis ou arqués ou polygonaux (40, 41 ; 96, 97) et les cylindres plieurs (32, 33 ; 100, 101) sont déplaçables en arc (de cercle) depuis le côté inférieur du flan (11, 90) vers le côté supérieur avec entraînement des pattes latérales (18, 19) ou des pattes latérales de couvercle (26, 27) et pliage autour des bords façonneurs (40, 41 ; 96, 97).

9. Dispositif selon la revendication 6 et une ou plusieurs des autres revendications, caractérisé par le fait qu'avec un flan (11, 90) agencé de façon telle que la paroi avant (15), la paroi de fond (16), la paroi arrière (17), la paroi arrière de couvercle (21), la paroi supérieure (22) et la paroi avant de couvercle (23) se suivent en direction longitudinale, les pattes latérales (18, 19) ou les pattes latérales de couvercle (26, 27) saillant latéralement sont déformables par un organe plieur continu commun (cylindre plieur (32, 33 ; 100, 101 ; barrettes plieuses 103, 104) avec organe contre-plieur correspondant (plaque façonneuse 39 ; 95) et formation des arêtes arrondies ou biseautées.

10. Dispositif selon la revendication 9, caractérisé par le fait que l'organe contre-plieur, c'est-à-dire la plaque façonneuse (39 ; 95), s'étend sur toute la longueur du flan (11, 90) au moins dans la zone des pattes latérales (18, 19) et des pattes latérales de couvercle (26, 27) et peut être monté et descendu.

11. Dispositif selon la revendication 7, caractérisé par le fait que les cylindres plieurs (32, 33 ; 100, 101) présentent des interruptions, en particulier des réductions de section (gorges 86), dans la zone de la paroi de fond (16) et dans celle de la paroi supérieure (22).

12. Dispositif selon la revendication 6 et une ou plusieurs des autres revendications, caractérisé par le fait que les organes plieurs (cylindres plieurs 32, 33 ; 100, 101 ; barrettes plieuses 103, 104) sont déplaçables simultanément et en synchronisme par un mécanisme commun (46, 109).

13. Dispositif selon la revendication 12 et une ou plusieurs des autres revendications, caractérisé par le fait que les cylindres plieurs (32, 33 ; 100, 101) sont, à leurs extrémités, montés (tournants) sur des supports, à savoir des bras supports (44, 45), qui sont affectés par paires, opposés à chaque cylindre plieur (32, 33 ; 100, 101) et peuvent être mus ensemble par deux mécanismes à manivelle (47, 48) par l'intermédiaire d'arbres moteurs correspondants (49, 50).

14. Dispositif selon la revendication 6 et une ou plusieurs des autres revendications, caractérisé par le fait que des flans (11, 90) peuvent être conduits les uns à la suite des autres sur une voie à flans (34) à un poste de façonnage (31) et être évacués de celui-ci après exécution des pliages et façonnages.

15. Dispositif selon la revendication 14 et une ou plusieurs des autres revendications, caractérisé par le fait que les flans (11, 90) peuvent être, en dehors du poste de façonnage (31), transportés par des cylindres tracteurs ou des paires de disques tracteurs (35, 36 ; 37, 38) et être, à la sortie du poste de façonnage (31), avancées par un organe transporteur séparé à action intermittente.

16. Dispositif selon la revendication 15 et une ou plusieurs des autres revendications, caractérisé par le fait que le flan (11, 90) se trouvant en position de repos au poste de façonnage (31) peut, après exécution des déformations, être saisi au dos et transporté le long d'un tronçon par un bras enleveur (71) tournant en permanence pourvu d'un ergot d'entraînement (72), ce bras enleveur (71) pouvant être entraîné de préférence par une manivelle (74) tournant en permanence.

17. Dispositif selon les revendications 15 et 16, caractérisé par le fait que les disques tracteurs (35, 36 ; 37, 38) et le bras enleveur (71), ou sa manivelle (74), sont entraînés en permanence par un mécanisme commun, en particulier par une transmission à courroie dentée (76).

18. Dispositif selon la revendication 14 et une ou plusieurs des autres revendications, caractérisé par le fait que la voie à flans (34), dans la zone du poste de façonnage (31), est constituée d'un profilé support (57) de largeur ou surface d'appui plus petite que le flan (11, 90) ou que la paroi avant (15) et la paroi arrière (17) de celui-ci, les disques tracteurs (35, 36 ou 37, 38) passant par une ouverture-fente (74) ménagée dans ledit profilé support (57).

19. Dispositif selon la revendication — et une ou plusieurs des autres revendications, caractérisé par le fait que les organes plieurs et les organes contre-plieurs, en particulier les cylindres plieurs (32, 33 ; 100, 101) ou les barrettes plieuses (103, 104) et/ou la plaque façonneuse (39, 95), peuvent être chauffés, de préférence par montage d'un élément chauffant (85) dans la plaque façonneuse (39, 95).

20. Dispositif selon la revendication 6 et une ou plusieurs des autres revendications, caractérisé par le fait qu'avant le poste de façonnage (31) sont placés des organes (81) d'application de liquide sur le flan (11, 90) dans la zone des bandes d'arête (29, 30), une mèche de transmission (83), sortant d'un réservoir de liquide (82), s'appuyant sur le flan (11, 90) dans la zone des bandes d'arête (29, 30).

21. Dispositif selon la revendication 10 et une ou plusieurs des autres revendications, caractérisé par le fait que le bras enleveur (71) passe par un évidement (65) ménagé dans la plaque façonneuse (39, 95).

22. Dispositif selon la revendication 6 et une ou plusieurs des autres revendications, caractérisé par le fait que le flan (11, 90), au poste de façonnage (31), est immobilisé à son extrémité avant par des organes de butée, en particulier par des pièces de butée coudées (69) ayant au moins un épaulement dirigé transversalement (70) qui s'appuie contre un talon correspondant du flan (11, 90).

23. Dispositif selon la revendication 6 et une ou plusieurs des autres revendications, caractérisé par le fait que les bords façonneurs (40, 41 ; 96, 97) de la plaque façonneuse (39, 95) et/ou les cylindres plieurs (32, 33 ; 100, 101) ou les barrettes plieuses (103, 104) sont, sur le côté dirigé vers le flan (11, 90), pourvus de profils s'étendant en direction longitudinale, en particulier de rainures longitudinales (112), stries ou autres.

24. Dispositif selon la revendication 6 et une ou plusieurs des autres revendications, caractérisé par le fait que les cylindres plieurs (32, 33 ; 100, 101) sont pourvus d'une enveloppe (102) en matière élastique.

25. Dispositif selon la revendication 6 et une ou plusieurs des autres revendications, caractérisé par le fait que les outils façonneurs extérieurs, en particulier les barrettes plieuses (103, 104) s'étendant en direction longitudinale (direction de transport), sont mobiles, en particulier basculants, perpendiculairement à la plaque façonneuse (95).

26. Dispositif selon la revendication 25, caractérisé par le fait que les barrettes façonneuses (103, 104) ont, en coupe, la forme de leviers (coudés) à deux bras et présentent des surfaces façonneuses (98, 99) formées selon les bords façonneurs (96, 97) de la plaque façonneuse (95).

27. Dispositif selon la revendication 26, caractérisé par le fait que la plaque façonneuse (95) présente des bords façonneurs (96, 97) pourvus de surfaces façonneuses (98, 99) faisant un angle entre elles, cet angle (par exemple de 120°) étant inférieur à l'angle que font les parois du flan (90) dans la zone des arêtes longitudinales (91).

28. Dispositif selon la revendication 25 et une ou plusieurs des autres revendications, caractérisé par le fait que les deux barrettes plieuses (103, 104) peuvent être actionnées (basculées) simultanément par une tringlerie commune (109).

29. Dispositif selon la revendication 6 et une ou plusieurs des autres revendications, caractérisé par le fait qu'après les outils façonneurs (32, 33 ; 100, 101 ; 103, 104 ; 39, 95), dans la zone d'un poste d'encollage (120), de la colle peut être appliquée sur le flan (11) par des rouleaux encolleurs (segments encolleurs 131, 132, 133, 134) ; ces rouleaux étant pourvus de surfaces encolleuses obliques (136, 137) ayant la même inclinaison que les pattes latérales (18, 19).

30. Dispositif selon la revendication 29, caractérisé par le fait que les rouleaux encolleurs sont des segments encolleurs (131 à 134) d'un cylindre encolleur commun (125), ces segments encolleurs (131 à 134) étant appliqués sur le pourtour extérieur de disques supports (128, 129, 130) montés sur un corps de cylindre (127).

31. Dispositif selon l'une des revendications 29 et 30, caractérisé par le fait que sur le cylindre encolleur (125) sont montés des segments encolleurs latéraux (131, 132) pour les pattes latérales (18, 19) dirigées obliquement et, dans la zone médiane, des segments encolleurs cylindriques (133, 134) pour l'encollage de parties médianes à plat du flan.

32. Dispositif selon la revendication 29, caractérisé par le fait que les pattes latérales (18, 19) peuvent être alignées par une embouchure (148) placée avant le cylindre encolleur (125) et pourvue de fentes obliques de guidage (150) pour les pattes latérales (18, 19) en position oblique.

33. Dispositif selon la revendication 29 et une ou plusieurs des autres revendications, caractérisé par le fait qu'un cylindre (154) pour le transfert de colle d'un pot à colle (153) aux segments encolleurs (131 à 134) à une configuration correspondant aux contours de ceux-ci ou du cylindre encolleur (125) et comporte une partie médiane cylindrique (155) et des parties coniques latérales (156).

34. Dispositif selon la revendication 33, caractérisé par le fait qu'une racle (157) placée dans le pot à colle (153) est adaptée au contour du cylindre de transfert de colle (154).

Fig. 1

Fig. 2

0 200 087

Fig. 3

Fig. 4

*Fig. 5*

0 200 087

*Fig. 6*

Fig. 7

6

Fig. 8

Fig. 9

Fig. 10

Fig. 11

Fig. 12

Fig. 13

**0 200 087**

*Fig. 14*

Fig. 15

0 200 087

Fig.16

Fig.17

Fig.18

0 200 087

Fig. 19